# EUROPEAN PATENT APPLICATION

(11) **EP 2 400 482 A1**
(43) Date of publication of application: **28.12.2011**
(21) Application number: 10732237.2
(22) Date of filing: 08.02.2010
(51) Int. Cl.: G09G 3/36, G02F 1/133, G09G 3/20, H04N 5/66

(54) **IMAGE DISPLAY APPARATUS AND IMAGE DISPLAY METHOD**

(30) Priority: 19.02.2009 JP 2009036923
(71) Applicant: Panasonic Corporation, Kadoma-shi Osaka 571-8501 (JP)
(72) Inventor: KATO, Toshiyuki, Osaka-shi, Osaka 540-6207 (JP); KOBAYASHI, Takahiro, Osaka-shi, Osaka 540-6207 (JP)
(74) Representative: Grünecker, Kinkeldey, Stockmair & Schwanhäusser
(86) International application number: PCT/JP2010/000724
(87) International publication number: WO 2010/095387

(57) **Abstract**

The image display apparatus and the image display method that can provide higher-definition moving images. An image processor (101) generates an interpolated image signal from an input image signal. A display panel (105) has a display area (107), and sequentially displays, in the display area (107), a source image based on the input image signal and an interpolating image based on the interpolated image signal. Further, the display panel (105) displays images at a higher rate in a specific divisional area in the display area (107) than in a further divisional area in the display area (107) for displaying images at a rate higher than an input frame rate of input image signals.

## Description

### Technical Field

The technical field relates to an image display apparatus and an image display method.

### Background Art

A hold-type display scheme represented by an active-type liquid crystal display apparatus and an active-type organic electroluminescence ("EL") display apparatus provides an advantage of reducing flickering and alleviating eye strain, over an impulse-type display scheme represented by a cathode ray tube ("CRT") display apparatus.

However, as to displaying moving images according to the hold-type display scheme, it has been reported that moving images are perceived as images integrated over pixels that change between frames, and the integration caused by the motions of these images produces blurs in images (for example, Patent Literature 1 and Patent Literature 2). This is because, usually, according to human visual characteristics, light stimulation of several 10 milliseconds or less is perceived being integrated substantially perfectly, and motion of 4 to 5 degrees per second or less can be followed only by eyeball movement.

As a scheme of improving the unnaturalness in the above moving image display, an image interpolating scheme has been reported in which an interpolated image signal is motion-adaptively generated from earlier and later input image signals and images are displayed by sequentially using the generated interpolated image signal as well as these two input image signals (for example, Patent Literature 1 and Patent Literature 3).

A conventional image display method based on the image interpolating scheme will be explained here.

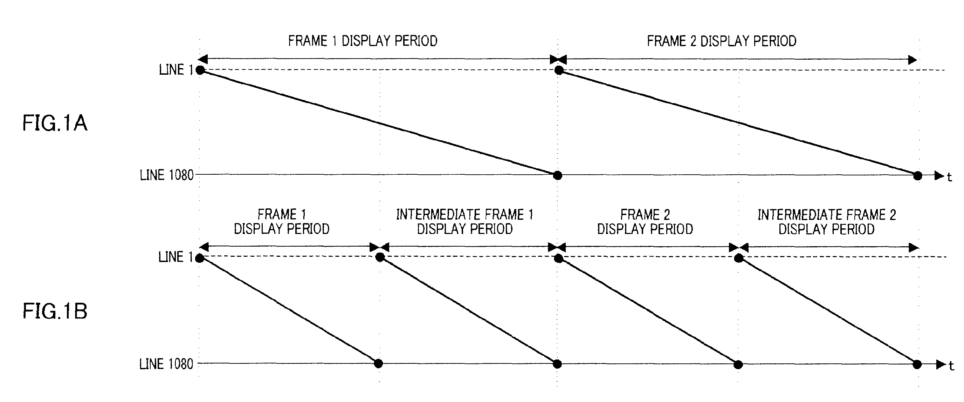

FIG.1 shows double-speed drive in an image display apparatus having 1080 scanning lines, as the first example of a conventional image display apparatus. To be more specific, FIG.1B shows double-speed line sequential drive in which the display frame rate is increased twice the input frame rate, and, for comparison, FIG.1A shows line sequential drive (hereinafter "constant-speed line sequential drive") in which the display frame rate is equal to the input frame rate without being increased. Note that, in the following explanation, the input frame rate represents in units of frame number the rate of input image signals received as input in the image processor of an image display apparatus, and the display frame rate represents in units of frame number the rate of images outputted from the display panel of the image display apparatus.

With constant-speed line sequential drive shown in FIG.1A, a plurality of frames (i.e. frame 1 and frame 2) are sequentially displayed as images (hereinafter "source images") based on input image signals. By contrast with this, with double-speed line sequential drive shown in FIG.1B, a plurality of frames (i.e. frame 1 and frame 2) are displayed as source images based on input image signals. In addition to this, intermediate frames (i.e. intermediate frame 1 and intermediate frame 2) are interpolated between frames and displayed as images (hereinafter, "interpolating images") based on interpolated image signals acquired from input image signals.

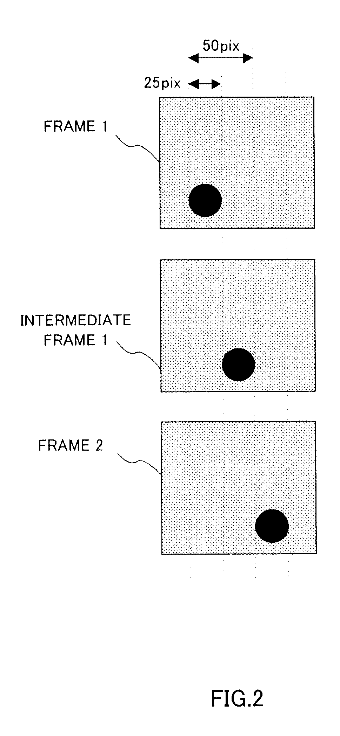

Thus, with double-speed line sequential drive, one frame of an interpolating image is additionally displayed for one frame of a source image, and therefore the display frame rate becomes twice the input frame rate. Consequently, as shown in, for example, FIG.2, when the symbol "•" moves 50 pixels (pix) between frame 1 and frame 2 in a moving image displayed on a screen, it is possible to reduce blurs in images by interpolating intermediate frame 1 in which the symbol "•" moves 25 pixels from frame 1.

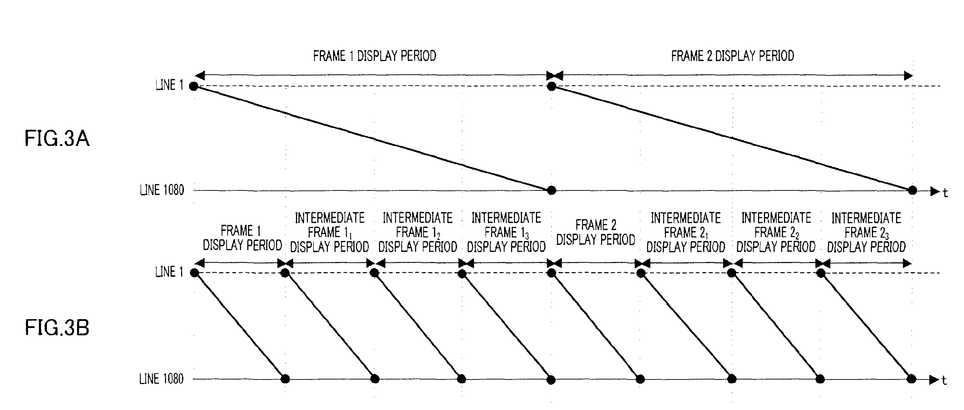

FIG.3 shows quadruple-speed drive in an image display apparatus that has 1080 scanning lines as a second example of a conventional image display apparatus. To be more specific, FIG.3B shows quadruple-speed line sequential drive in which the display frame rate is increased four times the input frame rate, and, for comparison, FIG.3A shows constant-speed line sequential drive.

With constant-speed line sequential drive shown in FIG.3A, a plurality of frames (i.e. frame 1 and frame 2) are sequentially displayed as source images. By contrast with this, with quadruple-speed line sequential drive shown in FIG.3B, a plurality of frames (i.e. frame 1 and frame 2) are displayed as source images. In addition to this, a plurality of intermediate frames (i.e. intermediate frame 1₁, intermediate frame 1₂, intermediate frame 1₃, intermediate frame 2₁, intermediate frame 2₂ and intermediate frame 2₃) are interpolated between frames and displayed as interpolating images.

Thus, with quadruple-speed line sequential drive, three frames of interpolating images are additionally displayed for one frame of the source image, and therefore the display frame rate becomes four times the input frame rate. Consequently, quadruple-speed line sequential drive can further reduce blurs in images compared to double-speed line sequential drive.

### Citation List

### Patent Literature

PTL 1: Japanese Patent No.3295437
PTL 2: Japanese Patent Application Laid-Open No.HEI9-325715
PTL 3: Japanese Patent No.3884885

### Summary

### Technical Problem

However, with the above conventional image display method, the scanning speed needs to be increased to display images at a frame rate higher than the input frame rate.

For example, in case of constant-speed line sequential drive, if the input frame rate is 60 Hz, scanning is performed at a vertical scanning frequency of 60 Hz. Therefore, with an image display apparatus that has 1080 scanning lines, the line scanning period, which is the time to scan one scanning line, is about 15.4 µs (i.e. microseconds).

By contrast with this, in case of double-speed line sequential drive, assuming the same condition, scanning needs to be performed at a vertical scanning frequency of 120 Hz. Therefore, with an image display apparatus that has 1080 scanning lines, the line scanning period is about 7.7 µs.

Similarly, in case of quadruple-speed line sequential drive, assuming the same condition, scanning needs to be performed at a vertical scanning frequency of 240 Hz. Therefore, with an image display apparatus that has 1080 scanning lines, the line scanning period is about 3.9 µs.

Thus, in order to increase the display frame rate twice, four times or more, it is necessary to reduce the line scanning period of all scanning lines to half, one fourth or less. That is, a multiple of a frame rate and a line scanning period are inversely proportional. However, the scanning speed for scanning lines has a limit value that depends on the responsivity of the display panel, and this makes scanning at a higher rate beyond the limit value difficult. Accordingly, double-speed line sequential drive used in the above conventional image display method makes it difficult to realize high frame rate drive, and has certain limitation in providing higher-definition moving images by reducing blurs in moving images.

It is therefore an object of the present invention to provide an image display apparatus and an image display method that can provide higher-definition moving images.

### Solution to Problem

The image display apparatus according to the present invention includes: a signal processing section that generates an interpolated image signal from an input image signal; and a display section that has a display area, and that sequentially displays, in the display area, images including at least one of a source image based on the input image signal and an interpolating image based on the interpolated image signal, and the display section displays the images at a higher rate in a specific divisional area in the display area than in a further divisional area in the display area.

Further, the image display method according to the present invention of, in an image display apparatus that has a display area, sequentially displaying, in the display area, images including at least one of a source image based on an input image signal and an interpolating image based on an interpolated image signal, includes: displaying the images at a higher rate in a specific divisional area in the display area than in a further divisional area in the display area.

### Advantageous Effects

The present invention can provide higher-definition moving images.

### Brief Description of Drawings

FIG.1A illustrates conventional constant-speed line sequential drive;
FIG.1B illustrates conventional double-speed line sequential drive;
FIG.2 illustrates the relationship between a source image and an interpolating image according to conventional double-speed line sequential drive;
FIG.3A illustrates conventional constant-speed line sequential drive;
FIG.3B illustrates conventional quadruple-speed line sequential drive;
FIG.4 is a block diagram showing a configuration of an image display apparatus according to Embodiment 1 of the present invention;
FIG.5 is a flowchart illustrating interpolated image signal processing according to Embodiment 1 of the present invention;
FIG.6 illustrates a scan driving operation according to Embodiment 1 of the present invention;
FIG.7A illustrates a scanning speed in a conventional scan driving operation;
FIG.7B illustrates a scanning speed in a scan driving operation according to Embodiment 1 of the present invention;
FIG.8 illustrates the relationship between a source image and an interpolating image according to Embodiment 1 of the present invention;
FIG.9 illustrates a scan driving operation according to Embodiment 2 of the present invention;
FIG.10A illustrates a scanning speed in a conventional scan driving operation;
FIG.10B illustrates a scanning speed in a scan driving operation according to Embodiment 2 of the present invention;
FIG.11 illustrates the relationship between a source image and an interpolating image according to Embodiment 2 of the present invention;
FIG.12 illustrates a scan driving operation according to Embodiment 3 of the present invention;
FIG.13A illustrates a scanning speed in a conventional scan driving operation;
FIG.13B illustrates a scanning speed in a scan driving operation according to Embodiment 3 of the present invention;
FIG.14A illustrates the delay time of a scan driving operation according to Embodiment 2 of the present invention;
FIG.14B illustrates the delay time of a scan driving operation according to Embodiment 3 of the present invention;
FIG.15 illustrates a scan driving operation according to Embodiment 4 of the present invention;
FIG.16A illustrates a scanning speed in a conventional scan driving operation;
FIG.16B illustrates a scanning speed in a scan driving operation according to Embodiment 4 of the present invention;
FIG.17 illustrates a scan driving operation according to Embodiment 5 of the present invention;
FIG.18 illustrates a scan driving operation according to Embodiment 6 of the present invention;
FIG.19A illustrates a scanning speed in a conventional scan driving operation;
FIG.19B illustrates a scanning speed in a scan driving operation according to Embodiment 6 of the present invention;
FIG.20 illustrates a scan driving operation according to Embodiment 7 of the present invention;
FIG.21 A illustrates a scanning speed in a conventional scan driving operation;
FIG.21B illustrates a scanning speed in a scan driving operation of conventional triple-speed line sequential drive;
FIG.21C illustrates a scanning speed in a scan driving operation according to Embodiment 7 of the present invention;
FIG.22 illustrates a scan driving operation according to Embodiment 8 of the present invention;
FIG.23 illustrates a scan driving operation according to Embodiment 9 of the present invention; and
FIG.24 illustrates a scan driving operation according to Embodiment 10 of the present invention.

### Description of Embodiments

Hereinafter, embodiments of the present invention will be explained in detail with reference to the accompanying drawings.

### (Embodiment 1)

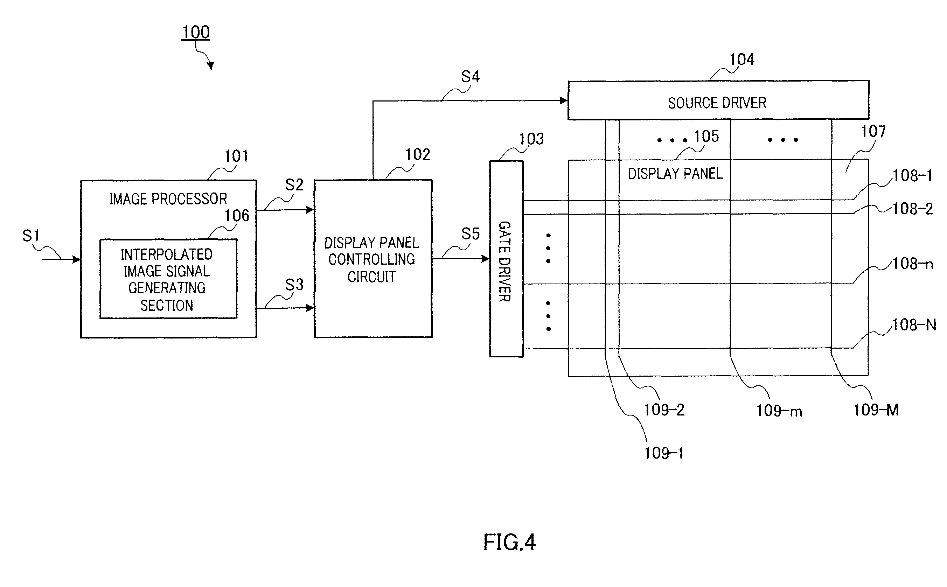

FIG.4 is a block diagram showing a configuration of an image display apparatus according to Embodiment 1 of the present invention.

In FIG.4, image display apparatus 100 has image processor 101, display panel controlling circuit 102, gate driver 103, source driver 104 and display panel 105. Image processor 101 has interpolated image signal generating section 106. Further, display panel 105 has display area 107 which is a display screen, N scanning lines 108-1, 108-2, ... and 108-N, and M data lines 109-1, 109-2, ... and 109-M.

In image processor 101 that is a signal processing section, interpolated image signal generating section 106 performs interpolated image signal generation processing with respect to image signals received as input sequentially. Arrow S1 represents a signal line for inputting image signals to image processor 101.

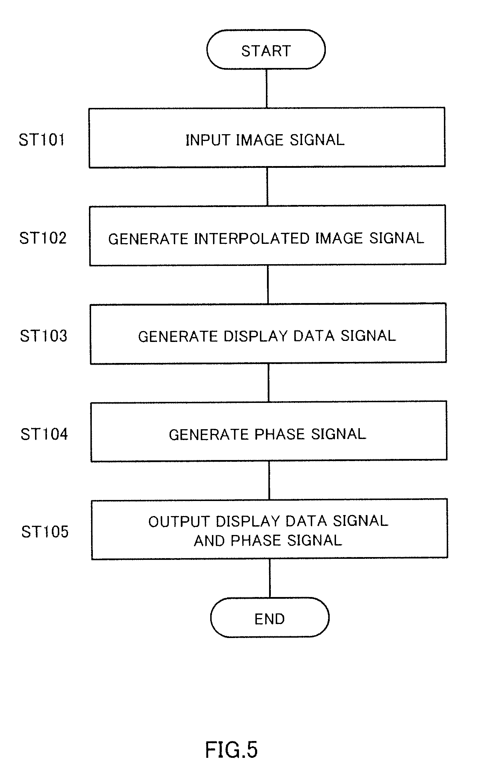

Here, an example of interpolated image signal generation processing performed in interpolated image signal generating section 106 will be explained with reference to FIG. 5.

In step ST101, image signals are sequentially inputted. The input image signals are temporarily stored in a memory (not shown) inside image processor 101.

In step ST102, one or more interpolated image signals are generated from an earlier inputted image signal and an input image signal received as input subsequent to the earlier inputted image signal. Although each input image signal includes an amount of information to cover the entire area of display area 107, an interpolated image signal generated from each input image signal may include a n amount of information to cover the entire area of display area 107 or include an amount of information to cover only a partial area.

In case where an interpolated image signal including an amount of information to cover only a partial area is generated, a portion corresponding to a partial area of display area 107 is extracted from each input image signal to generate an interpolated image signal including an amount of information to cover only a partial area, based on information included in the extracted portion. An interpolated image signal including an amount of information to cover the entire area is temporarily generated from each input image signal, to clip the portion corresponding to the partial area of display area 107 as the definitive interpolated image signal.

Note that the partial area of display area 107 that is covered by an interpolated image signal may be determined in advance or may be selected motion-adaptively. The partial area is set, for example, to include at least a lower part of display area 107 in which captions appear frequently on television images.

Further, the present embodiment and the subsequent embodiments will be explained assuming that the number of input image signals or interpolated image signals is equivalent to the number of frames displayed based on these signals. That is, the above "two input image signals" means two frames of input image signals, and the above "one or more interpolated image signal" means one or more frames of interpolation image signals.

In step ST103, display data signals are generated by interpolating generated interpolated image signals to predetermined positions of input image signals.

In step ST104, a phase signal is generated based on a generation result of the display data signal. Here, the phase signal indicates the position to start a sequential scan from upper scanning lines to lower scanning lines. For example, the phase signal indicates that scanning must start from line 1, or scanning must start from line 811.

In step ST105, the generated display data signal and phase signal are outputted to display panel controlling circuit 102.

In this way, interpolated image signal generating section 106 performs interpolated image signal generation processing. Note that the above interpolated image signal generation processing is performed every time an image signal is received as input. Further, the above interpolated image signal generation processing is realized by executing, in image processor 101, an interpolated image signal generating program stored in a storing medium (not shown) in advance.

Display panel controlling circuit 102 receives the display data signal and phase signal as input. Arrow S2 indicates the signal line for inputting display data signals to display panel controlling circuit 102, and arrow S3 indicates the signal line for inputting phase signals to display panel controlling circuit 102.

Display panel controlling circuit 102 generates a source driver control signal based on the display data signal, and outputs the generated source driver control signal to source driver 104. Further, display panel controlling circuit 102 generates the gate driver control signal based on the phase signal, and outputs the generated gate driver control signal to gate driver 103.

Source driver 104 receives the source driver control signal as input. Arrow S4 indicates the signal line for inputting source driver control signals to source driver 104. Source driver 104 drives data lines 109-1 to 109-M based on source driver control signals.

Gate driver 103 that is a scanning section receives gate driver control signals as input. Arrow S5 indicates the signal line for inputting gate driver control signals to gate driver 103. Gate driver 103 drives scanning lines 108-1 to 108-N based on gate driver control signals.

Display panel 105 that is a display section is a liquid crystal panel. To be more specific, display panel 105 employs a configuration in which a liquid crystal layer (not shown) is held through an oriented film (not shown), between: an array substrate (not shown) in which pixel electrodes (not shown) are arranged in the intersections of scanning lines 108-1 to 108-N and data lines 109-1 to 109-M that are arranged orthogonal to each other, through active elements (not shown) such as thin film transistors; and a counter substrate (not shown) which faces the array substrate and in which counter electrodes are formed. When gate driver 103 scans scanning line 108-n (where n is an integer of 1 to N), display area 107 of display panel 105 displays frames as source images based on input image signals, and intermediate frames as interpolating images based on interpolated image signals.

The configuration of image display apparatus 100 according to the present embodiment has been explained above.

Next, a scan driving operation executed by gate driver 103 of image display apparatus 100 will be explained. Further, although, for ease of explanation, the present embodiment and the subsequent embodiments adopt the precondition of the number of scanning lines N = 1080 and input frame rate 60 Hz, the present invention is applicable to scan driving operations under other conditions.

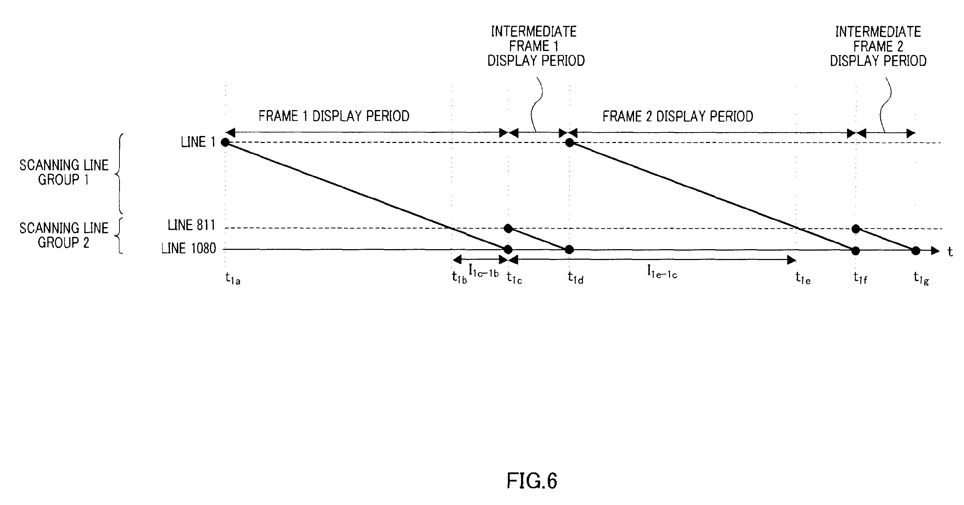

FIG.6 illustrates an example of a scan driving operation according to the present embodiment.

With the example shown in FIG.6, one divisional area (i.e. high rate area) of two divisional areas inside the display area is updated at a high refresh rate compared to the other divisional area, so that the display frame rate is increased. In FIG.6, scanning line group 2 is a group of scanning lines including line 811 to line 1080 corresponding to the divisional area covered by information of an interpolated image signal in the display area. Scanning line group 1 is a group of scanning lines including line 1 to line 810 corresponding to the other divisional area in the display area.

At time t₁ₐ, a scan for displaying frame 1 as the source image based on an input image signal is started from line 1, according to a gate driver control signal based on a corresponding phase signal. The input image signal includes an amount of information to cover the entire area of the display area, and therefore it is necessary to scan the scanning lines from line 1 to line 1080, that is, all scanning lines, to display the source image.

Note that the frame 1 display period is the source image display period for displaying frame 1 as a source image based on an input image signal, in other words, a period for driving data lines according to a source driver control signal derived from an input image signal.

Scanning line group 1 is sequentially scanned following the scan of line 1 at time t₁ₐ, and, at time t_{1b}, the scan of scanning line group 1 for displaying frame 1 is finished. Subsequently, a scan of scanning line group 2 for displaying frame 1 is sequentially performed from time t_{1b}, and is finished at time t_{1c}. That is, all scanning lines are sequentially scanned in the frame 1 display period without stopping halfway through.

At time t_{1c}, a scan for displaying intermediate frame 1 as an interpolating image based on an interpolated image signal is started from line 811, according to a gate driver control signal based on a corresponding phase signal. An interpolated image signal includes an amount of information to cover only a partial area of the display area, and therefore, to display an interpolating image, it is necessary to scan scanning lines (scanning lines from line 811 to line 1080 with this example) corresponding to the divisional area to be covered.

Note that the intermediate frame 1 display period is an interpolating image display period for displaying intermediate frame 1 as an interpolating image based on the interpolated image signal. In other words, the intermediate frame 1 display period is a period for driving data lines according to a source driver control signal derived from the interpolated image signal in order to display intermediate frame 1. Further, the base interpolated image signal for intermediate frame 1 is generated from the frame 1 input image signal and the frame 2 input image signal to compensate for the motion between frame 1 and frame 2, and is interpolated between these two input image signals.

Scanning line group 2 is sequentially scanned following the scan of line 811 at time t_{1c}, and, at time t_{1d}, the scan of scanning line group 2 for displaying intermediate frame 1 is finished.

Then, at time t_{1d}, a scan for displaying frame 2 as a source image based on an input image signal is started from line 1, according to a gate driver control signal based on a corresponding phase signal. The frame 2 display period is a source image display period for displaying frame 2 as a source image based on an input image signal. In other words, the frame 2 display period is a period for driving data lines according to a source driver control signal derived from an input image signal in order to display frame 2.

Scanning line group 1 is sequentially scanned following the scan of line 1 at time t_{1d}, and, at time t₁ₑ, the scan of scanning line group 1 for displaying frame 2 is finished. Subsequently, a scan of scanning line group 2 for displaying frame 2 is sequentially performed from time t₁ₑ, and is finished at time t_{1f}. That is, all scanning lines are scanned in the frame 2 display period without stopping halfway through.

At time t_{1f}, a scan for displaying intermediate frame 2 as an interpolating image based on an interpolated image signal is started from line 811, according to a gate driver control signal based on a corresponding phase signal. The intermediate frame 2 display period is an interpolating image display period for displaying intermediate frame 2 as an interpolating image based on the interpolated image signal. In other words, the intermediate frame 2 display period is a period for driving data lines according to a source driver control signal derived from the interpolated image signal in order to display intermediate frame 2. Further, the base interpolated image signal for intermediate frame 2 is generated from the frame 2 input image signal and the frame 3 input image signal to compensate for the motion between frame 2 and frame 3, and is interpolated between these two input image signals.

Scanning line group 2 is sequentially scanned following the scan of line 811 at time t_{1f}, and, at time t_{1g}, the scan of scanning line group 2 for displaying intermediate frame 2 is finished.

According to the above scan driving operation, while a source image is displayed by scanning all scanning lines, an interpolating image is displayed by scanning only the scanning lines included in scanning line group 2. Therefore, while the refresh rate has higher values (75 Hz and 300 Hz alternately) than the input frame rate in the divisional area corresponding to scanning line group 2 in the display area, the refresh rate is maintained at 60 Hz, which is equal to the input frame rate, in the divisional area corresponding to scanning line group 1 in the display area. In other words, while the vertical scanning frequency for scanning line group 2 has a higher value than the input frame rate, the vertical scanning frequency for scanning line group 1 i s maintained at 60 Hz which is equal to the input frame rate. Consequently, although the display frame rate is increased compared to the input frame rate, it is possible to suppress a substantial increase in the scanning speed for each scanning line.

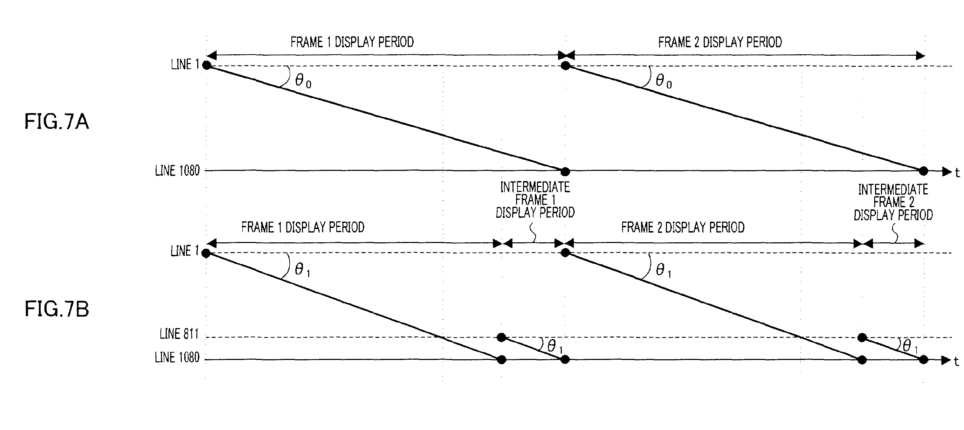

The advantage of suppressing the substantial increase in scanning speed is obvious with reference to FIG.7. FIG.7 compares a conventional scan driving operation and a scan driving operation according to the present embodiment, and FIG.7A shows the former and FIG.7B shows the latter. The conventional technique illustrated in FIG.7A for comparison is the above constant-speed line sequential drive in which an interpolating image is not displayed per time equivalent to one frame period of an input image signal, and the display frame rate is not increased. By contrast with this, with the present embodiment, an interpolating image is displayed per time equivalent to one frame period of an input image signal, and the display frame rate is increased. Therefore, angle θ₁ representing the scanning speed of the present embodiment is greater than θ₀ representing the scanning speed of a conventional technique. However, the range to repeat scanning for displaying an interpolating image is limited only to part of scanning lines, and therefore there is no significant difference between angle θ₁ and angle θ₀. The line scanning period of the present embodiment calculated based on the above precondition is about 12.3 µs. This is a little shorter than the line scanning period of conventional constant-speed line sequential drive, which is about 15.4 µs, but is substantially longer than the line scanning period of conventional double-speed line sequential drive, which is about 7.7 µs. Further, even if line sequential drive in which the refresh rate of the entire display area is switched alternately between 75 Hz and 300 Hz is assumed, it is possible to secure a sufficiently longer line scanning period with the present embodiment than an average line scanning period required for this line sequential drive. Consequently, it is possible to reduce the possibility that high frame rate drive is inhibited by the responsivity of the display panel. That is, it is possible to realize high frame rate drive and reduce blurs in moving images motion-adaptively, and, consequently, provide higher-definition moving images.

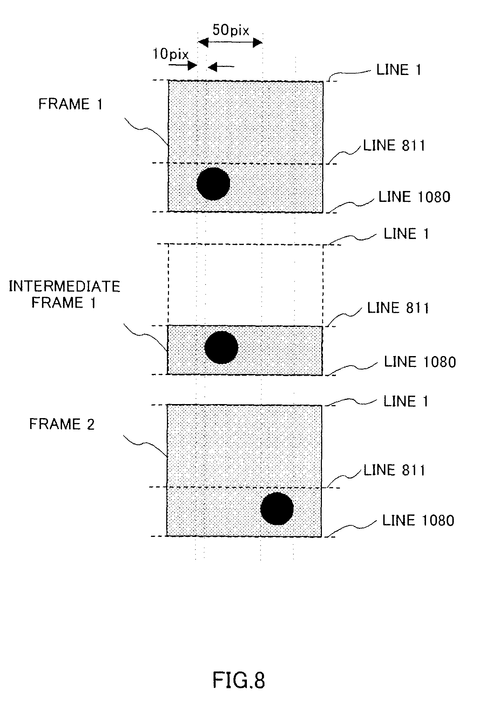

FIG.8 illustrates the relationship between a source image and an interpolating image to be displayed in the present embodiment.

To generate an interpolated image signal to reduce blurs in images produced by motions of images, the time interval between a scan for displaying the source image and a scan for displaying an interpolating image, needs to be taken into account. Here, focusing on line 811 with reference to FIG.6, time interval I_{1c-1b} between a scan in the frame 1 display period and a scan in the intermediate frame 1 display period is substantially shorter than time interval I_{1e-1c} between a scan in the intermediate frame 1 display period and a scan in the frame 2 display period. To be more specific, time interval I_{1c-1b} is about 3.3 ms and time interval I_{1e-1c} is about 13.3 ms, so that an interpolated image signal is generated such that, as shown in FIG.8, the amount of motion between frame 1 and intermediate frame 1 is one fifth of the amount of motion between frame 1 and frame 2. In this case, the hold period of the display panel in the area between line 811 and line 1080 is 13.3 ms at maximum and is shorter than about 16.7 ms in case of conventional constant-speed line sequential drive, so that it is possible to reduce blurs in images produced by motions of images.

As explained above, according to the present embodiment, by increasing the refresh rate only in a limited area inside the display area, it is possible to prevent the scanning speed from increasing substantially following an increase in the display frame rate. Thus, it is possible to realize high frame rate drive regardless of inhibition by the responsivity of the display panel, reduce blurs in moving images motion-adaptively and, consequently, provide higher-definition moving images.

This advantage is visually checked particularly from fast-scrolling captions, and, therefore, with the present embodiment, the lower area in which captions scrolling horizontally appear frequently and which corresponds to the lower end part of the display screen, is set as a high refresh rate area. However, an area other than the lower end part of the display screen may be set as a high refresh rate area. Further, although, with the present embodiment, 270 lines from line 811 to line 1080 are set as the range of the high refresh rate area, this range may also be changed.

### (Embodiment 2)

Hereinafter, an image display apparatus according to Embodiment 2 of the present invention will be explained. The image display apparatus according to the present embodiment employs the same configuration as image display apparatus 100 according to Embodiment 1. Hence, when the same components as in Embodiment 1 will be mentioned, these components will be assigned the same reference numerals and will not be explained in detail.

The present embodiment differs from Embodiment 1 in that, when interpolated image signal generating section 106 generates a display data signal, a scan of part of scanning lines for displaying the source image is inserted into a scan of another part of scanning lines for displaying the same source image to equalize time intervals for a scan of part of scanning line groups.

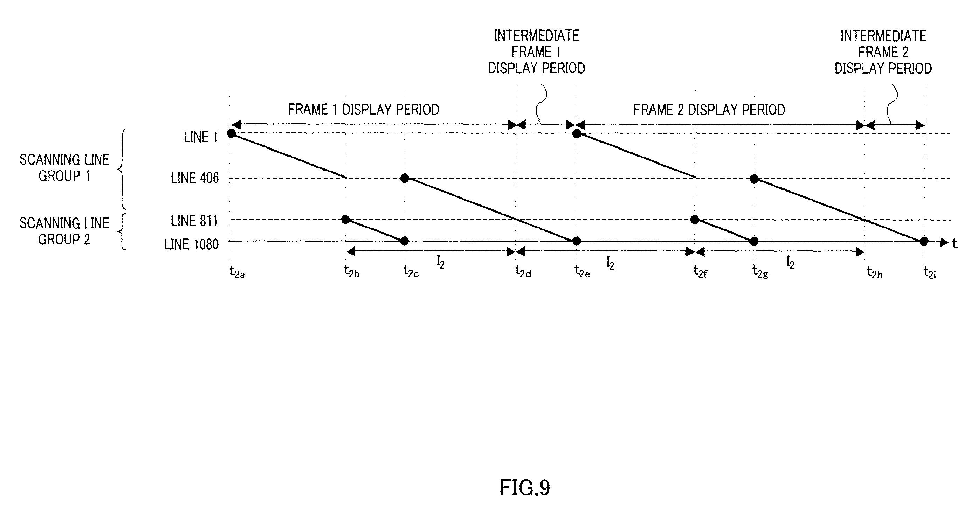

FIG.9 illustrates an example of a scan driving operation according to the present embodiment.

With the example shown in FIG.9, one divisional area (i.e. high rate area) of two divisional areas inside the display area is updated at a high refresh rate compared to the other divisional area, so that the display frame rate is increased. In FIG.9, scanning line group 2 is a group of scanning lines including line 811 to line 1080 corresponding to the divisional area covered by information of the interpolated image signals in the display area. Scanning line group 1 is a group of scanning lines including line 1 to line 810 corresponding to the other divisional area in the display area.

At time t₂ₐ, a scan for displaying frame 1 as a source image based on an input image signal is started from line 1 , according to a gate driver control signal based on a corresponding phase signal.

Scanning line group 1 is sequentially scanned following the scan of line 1 at time t₂ₐ. Then, at time t_{2b}, when a scan up to line 405 for displaying frame 1 is finished, a scan from line 811 is started, skipping line 406 to line 810, according to a gate driver control signal based on a corresponding phase signal. A scan of scanning line group 2 is sequentially performed following the scan of line 811, and is finished at time t_{2c}. From time t_{2c}, a scan from line 406 to line 810, which were skipped previously, is sequentially performed, and is finished at time t_{2d}. That is, all scanning lines in the frame 1 display period are sequentially scanned without stopping halfway through. Note that a scan of scanning line group 2 in the frame 1 display period is inserted into a scan of scanning line group 1 in the frame 1 display period.

At time t_{2d}, a scan for displaying intermediate frame 1 as an interpolating image based on an interpolated image signal is started from line 811, according to a gate driver control signal based on a corresponding phase signal.

Scanning line group 2 is sequentially scanned following the scan of line 811 at time t_{2d}, and, at time t₂ₑ, the scan of scanning line group 2 for displaying intermediate frame 1 is finished.

Then, at time t₂ₑ, a scan for displaying frame 2 as a source image based on an input image signal is started from line 1, according to a gate driver control signal based on a corresponding phase signal.

Scanning line group 1 is sequentially scanned following the scan of line 1 at time t₂ₑ. Then, at time t_{2f}, when a scan up to line 405 for displaying frame 2 is finished, a scan from line 811 is started, skipping line 406 to line 810, according to a gate driver control signal based on a corresponding phase signal. A scan of scanning line group 2 is sequentially performed following the scan of line 811, and is finished at time t_{2g}. From time t_{2g}, a scan from line 406 to line 810, which were skipped previously, is sequentially performed, and is finished at time t₂ₕ. That is, all scanning lines in the frame 2 display period are sequentially scanned without stopping halfway through. Note that a scan of scanning line group 2 in the frame 2 display period is inserted into a scan of scanning line group 1 in the frame 2 display period.

At time t₂ₕ, a scan for displaying intermediate frame 2 as an interpolating image based on an interpolated image signal is started from line 811, according to a gate driver control signal based on a corresponding phase signal.

Scanning line group 2 is sequentially scanned following the scan of line 811 at time t₂ₕ, and, at time t₂ᵢ, the scan of scanning line group 2 for displaying intermediate frame 2 is finished.

According to the above scan driving operation, while a source image is displayed by scanning all scanning lines, an interpolating image is displayed by scanning only the scanning lines included in scanning line group 2. Consequently, similar to the above embodiments, it is possible to prevent the scanning speed for each scanning line from increasing substantially.

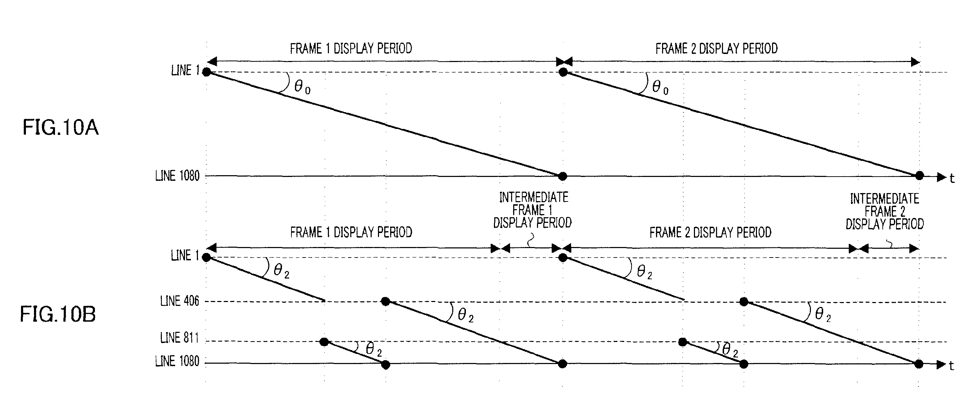

The advantage of suppressing the substantial increase in scanning speed is obvious with reference to FIG.10. FIG.10 compares a conventional scan driving operation and a scan driving operation according to the present embodiment, and FIG. 10A shows the former and FIG.10B shows the latter. The conventional technique illustrated in FIG.10A for comparison is the above constant-speed line sequential drive in which an interpolating image is not displayed per time equivalent to one frame period of an input image signal, and the display frame rate is not increased. By contrast with this, with the present embodiment, an interpolating image is displayed per time equivalent to one frame period of an input image signal, and the display frame rate is increased twice. Therefore, angle θ₂ representing the scanning speed of the present embodiment is greater than θ₀ representing the scanning speed of a conventional technique. However, the range to repeat scanning for displaying an interpolating image is limited only to part of scanning lines, and therefore there is no significant difference between angle θ₂ and angle θ₀. The line scanning period of the present embodiment calculated based on the above precondition is about 12.3 µs. This is a little shorter than the line scanning period of conventional constant-speed line sequential drive, which is about 15.4 µs, but is substantially longer than the line scanning period of conventional double-speed line sequential drive, which is about 7.7 µs. Thus, with the present embodiment, it is possible to secure a sufficiently long line scanning period similar to above Embodiment 1. Consequently, it is possible to reduce the possibility that high frame rate drive is inhibited by the responsivity of the display panel. That is, it is possible to realize high frame rate drive and reduce blurs in moving images motion-adaptively, and, consequently, provide higher-definition moving images.

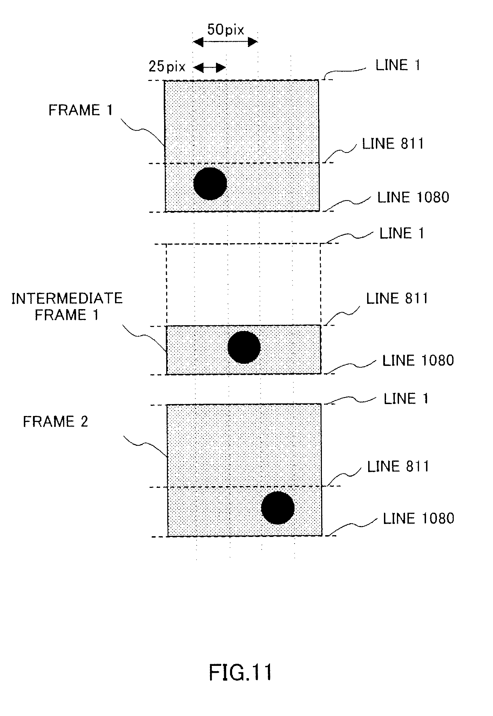

FIG.11 illustrates the relationship between a source image and an interpolating image to be displayed in the present embodiment.

To generate an interpolated image signal to reduce a blur in an image produced by a motion of an image, the time interval between a scan for displaying the source image and a scan for displaying an interpolating image, needs to be taken into account. Here, focusing on line 811 with reference to FIG.9, time interval I₂ between a scan in the frame 1 display period and a scan in the intermediate frame 1 display period, time interval I₂ between a scan in the intermediate frame 1 display period and a scan in the frame 2 display period, and time interval I₂ between a scan in the frame 2 display period and a scan in the intermediate frame 2 display period, are mutually equal. To be more specific, time intervals I₂ are about 8.3 ms. That is, scanning line group 2 is scanned at equal time intervals.

Time interval I₂ is equalized by inserting a scan of scanning line group 2 in the source image display period, into a scan of scanning line group 1 in the source image display period.

Accompanying this, an interpolated image signal is generated such that, as shown in FIG.11, the amount of motion between frame 1 and intermediate frame 1 is half the amount of motion between frame 1 and frame 2. By this means, intermediate frame 1 does not provide an image that is biased toward one of an earlier or later frame (that is, frame 1 or frame 2) but provides an image just in the middle of an earlier and later frames, so that calculation for generating an interpolated image signal is simple compared to Embodiment 1.

Further, it is possible to apply an existing system which is widely used to generate interpolated image signals, to image display apparatus 100 according to the present embodiment without substantially modifying the program. This is because an existing system for generating interpolated image signals for double-speed drive is programmed to calculate an image just in the middle of two of earlier and later frames as an intermediate frame.

In this case, the hold period of the display panel in the area between line 811 and line 1080 is 8.3 ms at maximum and is shorter than about 16.7 ms in case of conventional constant-speed line sequential drive, so that it is possible to reduce blurs in images produced by motions of images.

As explained above, according to the present embodiment, by increasing the refresh rate only in a limited area inside the display area, it is possible to prevent the scanning speed from increasing substantially following an increase in the display frame rate. Thus, it is possible to realize high frame rate drive regardless of inhibition by the responsivity of the display panel, reduce blurs in moving images motion-adaptively and, consequently, provide higher-definition moving images.

### (Embodiment 3)

Hereinafter, an image display apparatus according to Embodiment 3 of the present invention will be explained. The image display apparatus according to the present embodiment employs the same configuration as image display apparatus 100 according to Embodiment 1. Hence, when the same components as in Embodiment 1 will be mentioned, these components will be assigned the same reference numerals and will not be explained in detail.

The present embodiment differs from Embodiment 1 in that, when interpolated image signal generating section 106 generates a display data signal, a scan for displaying the source image is inserted into a scan for displaying the source image of one frame to equalize time intervals for a scan of part of scanning line groups.

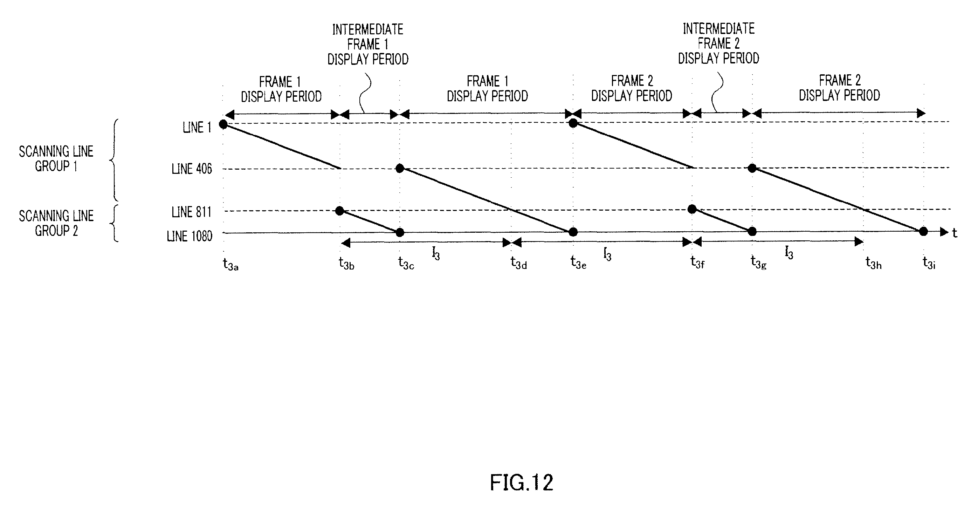

FIG.12 illustrates an example of a scan driving operation according to the present embodiment.

With the example shown in FIG.12, one divisional area (i.e. high rate area) of two divisional areas inside the display area is updated at a high refresh rate compared to the other divisional area, so that the display frame rate is increased. In FIG.12, scanning line group 2 is a group of scanning lines including line 811 to line 1080 corresponding to the divisional area covered by information of the interpolated image signals in the display area. Scanning line group 1 is a group of scanning lines including line 1 to line 810 corresponding to the other divisional area in the display area.

At time t₃ₐ, a scan for displaying frame 1 as a source image based on an input image signal is started from line 1, according to a gate driver control signal based on a corresponding phase signal. Scanning line group 1 is sequentially scanned following the scan of line 1 at time t₃ₐ. Then, at time t_{3b}, when a scan up to line 405 for displaying frame 1 is finished, the scan for displaying frame 1 is suspended and a scan from line 406 to line 1080 is skipped.

From time t_{3b}, a scan for displaying intermediate frame 1 as an interpolating image based on an interpolated image signal is started. That is, a scan from line 811 is started, according to a gate driver control signal based on a corresponding phase signal. A scan of scanning line group 2 is sequentially performed following the scan of line 811, and, when this is finished at time t_{3c}, the scan for displaying intermediate frame 1 is finished.

From time t_{3c}, the scan for displaying frame 1, which was suspended previously, is resumed. That is, a scan from line 406 to line 1080, which were skipped previously, is sequentially performed according to a gate driver control signal based on a corresponding phase signal, and is finished at time t₃ₑ. That is, a sequential scan of scanning line group 2 performed in the intermediate frame 1 display period is inserted in the middle of a sequential scan of all scanning lines performed in the frame 1 display period.

Then, at time t₃ₑ, a scan for displaying frame 2 as a source image based on an input image signal is started from line 1, according to a gate driver control signal based on a corresponding phase signal. Scanning line group 1 is sequentially scanned following the scan of line 1 at time t₃ₑ. Then, at time t_{3f}, when a scan up to line 405 for displaying frame 2 is finished, the scan for displaying frame 2 is suspended and a scan from line 406 to line 1080 is skipped.

From time t_{3f}, a scan for displaying intermediate frame 2 as an interpolating image based on an interpolated image signal is started. That is, a scan from line 811 is started, according to a gate driver control signal based on a corresponding phase signal. A scan of scanning line group 2 is sequentially performed following the scan of line 811, and, when this is finished at time t_{3g}, the scan for displaying intermediate frame 2 is finished.

From time t_{3g}, the scan for displaying frame 2, which was suspended previously, is resumed. That is, a scan from line 406 to line 1080, which were skipped previously, is sequentially performed according to a gate driver control signal based on a corresponding phase signal, and is finished at time t₃ᵢ. That is, a sequential scan of scanning line group 2 performed in the intermediate frame 2 display period is inserted in the middle of a sequential scan of all scanning lines performed in the frame 2 display period.

According to the above scan driving operation, while a source image is displayed by scanning all scanning lines, an interpolating image is displayed by scanning only the scanning lines included in scanning line group 2. Consequently, similar to the above embodiments, it is possible to prevent the scanning speed for each scanning line from increasing substantially.

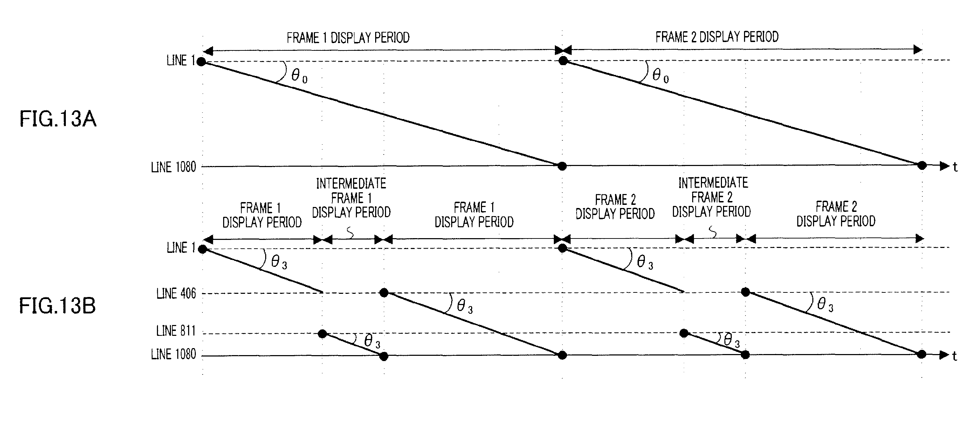

The advantage of suppressing the substantial increase in scanning speed is obvious with reference to FIG.13. FIG.13 compares a conventional scan driving operation and a scan driving operation according to the present embodiment, and FIG.13A shows the former and FIG.13B shows the latter. The conventional technique illustrated in FIG.13A for comparison is the above constant-speed line sequential drive in which an interpolating image is not displayed per time equivalent to one frame period of an input image signal, and the display frame rate is not increased. By contrast with this, with the present embodiment, an interpolating image is displayed per time equivalent to one frame period of an input image signal, and the display frame rate is increased twice. Therefore, angle θ₃ representing the scanning speed of the present embodiment is greater than θ₀ representing the scanning speed of a conventional technique. However, the range to repeat scanning for displaying an interpolating image is limited only to part of scanning lines, and therefore there is no significant difference between angle θ₃ and angle θ₀. The line scanning period of the present embodiment calculated based on the above precondition is about 12.3 µs. This is a little shorter than the line scanning period of conventional constant-speed line sequential drive, which is about 15.4 µs, but is substantially longer than the line scanning period of conventional double-speed line sequential drive, which is about 7.7 µs. Thus, with the present embodiment, it is possible to secure a sufficiently long line scanning period similar to the above embodiments. Consequently, it is possible to reduce the possibility that high frame rate drive is inhibited by the responsivity of the display panel. That is, it is possible to realize high frame rate drive and reduce blurs in moving images motion-adaptively, and, consequently, provide higher-definition moving images.

Further, according to the above scan driving operation, the scan of scanning line group 2 in the interpolating image display period is inserted into a scan of all scanning lines in the source image display period. By this means, time intervals I₃ to scan scanning line group 2 are equalized as shown in FIG.12. To be more specific, time intervals I₃ are about 8.3 ms. Consequently, it is also possible to realize in the present embodiment the unique advantage realized in Embodiment 2.

As explained above, according to the present embodiment, by increasing the refresh rate only in a limited area inside the display area, it is possible to prevent the scanning speed from increasing substantially following an increase in the display frame rate. Thus, it is possible to realize high frame rate drive regardless of inhibition by the responsivity of the display panel, reduce blurs in moving images motion-adaptively and, consequently, provide higher-definition moving images.

Further, the present embodiment can realize a more effective advantage in terms of the delay time compared to Embodiment 2. The reason is as follows.

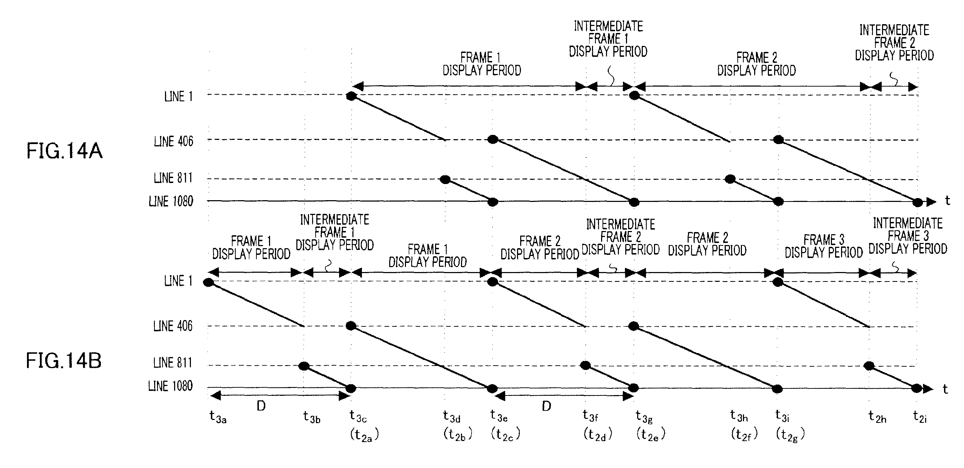

FIG.14 compares scan timings of Embodiment 2 and scan timings of Embodiment 3, and FIG.14A shows the former and FIG.14B shows the latter.

With Embodiment 2 shown in FIG.14A, intermediate frame 1 is interpolated between frame 1 and frame 2. That is, a base interpolated image signal for intermediate frame 1 which is generated from a base input image signal for frame 1 and a base input image signal for frame 2, is interpolated between these two input image signals.

By contrast with this, with Embodiment 3 shown in FIG.14B, the interpolating image based on the interpolated image signal generated from the base input image signal for the first frame and the base input image signal for frame 2, is intermediate frame 2. Accordingly, intermediate frame 1 displayed in the intermediate frame 1 display period of Embodiment 2 shown in FIG.14A and intermediate frame 2 displayed in the intermediate frame 2 display period of the present embodiment shown in FIG.14B are the same image. The base interpolated image signal for intermediate frame 1 of Embodiment 2 and the base interpolated image signal for intermediate frame 2 of the present embodiment can be both generated at the timing subsequent to the timings two frames of image signals are received as input, and, consequently, can be both generated at the same timing.

Then, assuming that the respective interpolated image signals are generated at the same time, if the scan timing for intermediate frame 1 of Embodiment 2 and the scan timing for intermediate frame 2 of the present embodiment are synchronized as shown in FIG.14, it is possible to perform a scan of each frame in the present embodiment time difference D earlier than the scan of each frame in Embodiment 2. The reason is as follows. In case of Embodiment 2, an interpolated image signal of an intermediate frame is interpolated in an intermediate portion of two frames of input image signals. By contrast with this, in case of the present embodiment, an interpolated image signal of an intermediate frame is interpolated in a rear portion of two frames of input image signals, that is, in frame 2 of an input image signal, so that it is possible to display each frame relatively early with the present embodiment. Consequently, with the present embodiment, it is possible to reduce the delay time from the timing an image signal is received as input, to the timing the source image is displayed, compared to Embodiment 2.

Thus, it is possible to reduce the delay time, so that the present embodiment provides an advantage of, in a video game, improving a response from user input to screen display, and making a voice delay circuit for lip-sync adjustment smaller.

### (Embodiment 4)

Hereinafter, an image display apparatus according to Embodiment 4 of the present invention will be explained. The image display apparatus according to the present embodiment employs the same configuration as image display apparatus 100 according to Embodiment 1. Hence, when the same components as in Embodiment 1 will be mentioned, these components will be assigned the same reference numerals and will not be explained in detail.

The present embodiment differs from Embodiment 1 in displaying a plurality of frames of interpolating images for one frame of a source image.

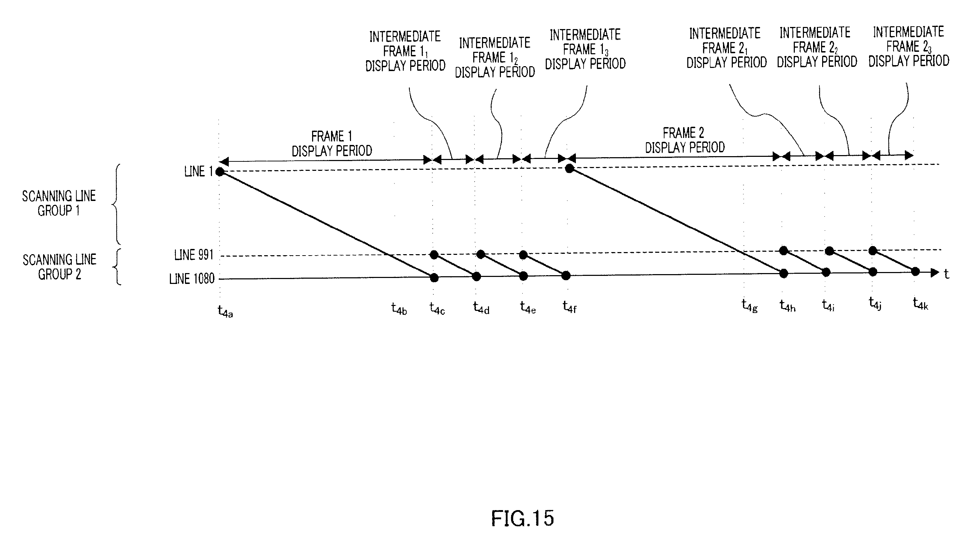

FIG.15 illustrates an example of a scan driving operation according to the present embodiment.

With the example shown in FIG. 15, one divisional area (i.e. high rate area) of two divisional areas inside the display area is updated at a high refresh rate compared to the other divisional area, so that the display frame rate is increased. In FIG.15, scanning line group 2 is a group of scanning lines including line 991 to line 1080 corresponding to the divisional area covered by information of the interpolated image signals in the display area. Scanning line group 1 is a group of scanning lines including line 1 to line 990 corresponding to the other divisional area in the display area.

At time t₄ₐ, a scan for displaying frame 1 as a source image based on an input image signal is started from line 1, according to a gate driver control signal based on a corresponding phase signal.

Scanning line group 1 is sequentially scanned following the scan of line 1 at time t₄ₐ, and, at time t_{4b}, the scan of scanning line group 1 for displaying frame 1 is finished. Subsequently, from time t_{4b}, a scan of scanning line group 2 for displaying frame 1 is sequentially performed, and is finished at time t_{4c}. That is, all scanning lines in the frame 1 display period are sequentially scanned without stopping halfway through.

Then, a scan for sequentially displaying intermediate frame 1₁, intermediate frame 1₂ and intermediate frame 1₃ is performed. The base interpolated image signals for intermediate frame 1₁, intermediate frame 1₂ and intermediate frame 1₃ are generated from the frame 1 input image signal and the frame 2 input image signal to compensate for the motion between frame 1 and frame 2, and are sequentially interpolated between these two input image signals.

At time t_{4c}, a scan for displaying intermediate frame 1₁ as an interpolating image based on an interpolated image signal is started from line 991, according to a gate driver control signal based on a corresponding phase signal. Scanning line group 2 is sequentially scanned following the scan of line 991, and, at time t_{4d}, the scan of scanning line group 2 for displaying intermediate frame 1 is finished.

At time t_{4d}, a scan for displaying intermediate frame 1₂ as an interpolating image based on an interpolated image signal is started from line 991, according to a gate driver control signal based on a corresponding phase signal. Scanning line group 2 is sequentially scanned following the scan of line 991, and, at time t₄ₑ, the scan of scanning line group 2 for displaying intermediate frame 1₂ is finished.

At time t₄ₑ, a scan for displaying intermediate frame 1₃ as an interpolating image based on an interpolated image signal is started from line 991, according to a gate driver control signal based on a corresponding phase signal. Scanning line group 2 is sequentially scanned following the scan of line 991, and, at time t_{4f}, the scan of scanning line group 2 for displaying intermediate frame 1₃ is finished.

Then, at time t_{4f}, a scan for displaying frame 2 as a source image based on an input image signal is started from line 1, according to a gate driver control signal based on a corresponding phase signal.

Scanning line group 1 is sequentially scanned following the scan of line 1 at time t_{4f}, and, at time t_{4g}, the scan of scanning line group 1 for displaying frame 2 is finished. Subsequently, from time t_{4g}, the scan of scanning line group 2 for displaying frame 2 is sequentially performed, and is finished at time t₄ₕ. That is, all scanning lines in the frame 2 display period are sequentially scanned without stopping halfway through.

Then, a scan for sequentially displaying intermediate frame 2₁, intermediate frame 2₂ and intermediate frame 2₃ is performed. The base interpolated image signals for intermediate frame 2₁, intermediate frame 2₂ and intermediate frame 2₃ are generated from the frame 2 input image signal and the frame 3 input image signal to compensate for the motion between frame 2 and frame 3, and are sequentially interpolated between these two input image signals.

At time t₄ₕ, a scan for displaying intermediate frame 2₁ as an interpolating image based on an interpolated image signal is started from line 991, according to a gate driver control signal based on a corresponding phase signal. Scanning line group 2 is sequentially scanned following the scan of line 991, and, at time t₄ᵢ, the scan of scanning line group 2 for displaying intermediate frame 2₁ is finished.

At time t₄ᵢ, a scan for displaying intermediate frame 2₂ as an interpolating image based on an interpolated image signal is started from line 991, according to a gate driver control signal based on a corresponding phase signal. Scanning line group 2 is sequentially scanned following the scan of line 991, and, at time t₄ⱼ, the scan of scanning line group 2 for displaying intermediate frame 2₂ is finished.

At time t₄ⱼ, a scan for displaying intermediate frame 2₃ as an interpolating image based on an interpolated image signal is started from line 991, according to a gate driver control signal based on a corresponding phase signal. Scanning line group 2 is sequentially scanned following the scan of line 991, and, at time t₄ₖ, the scan of scanning line group 2 for displaying intermediate frame 2₃ is finished.

According to the above scan driving operation, while a source image is displayed by scanning all scanning lines, an interpolating image is displayed by scanning only the scanning lines included in scanning line group 2. Consequently, similar to the above embodiments, it is possible to prevent the scanning speed for each scanning line from increasing substantially.

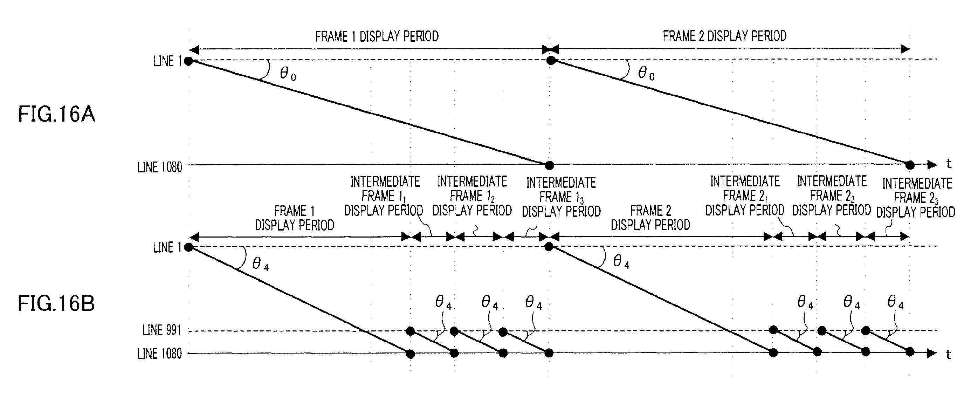

The advantage of suppressing the substantial increase in scanning speed is obvious with reference to FIG.16. FIG.16 compares a conventional scan driving operation and a scan driving operation according to the present embodiment, and FIG.16A shows the former and FIG.16B shows the latter. The conventional technique illustrated in FIG.16A for comparison is the above constant-speed line sequential drive in which an interpolating image is not displayed per time equivalent to one frame period of an input image signal, and the display frame rate is not increased. By contrast with this, with the present embodiment, an interpolating image is displayed per time equivalent to one frame period of an input image signal, and the display frame rate is increased. Therefore, angle θ₄ representing the scanning speed of the present embodiment is greater than θ₀ representing the scanning speed of a conventional technique. However, the range to repeat scanning for displaying an interpolating image is limited only to part of scanning lines, and therefore there is no significant difference between angle θ₄ and angle θ₀. The line scanning period of the present embodiment calculated based on the above precondition is about 12.3 µs, so that it is possible to secure a sufficiently long line scanning period similar to above embodiments. Consequently, it is possible to reduce the possibility that high frame rate drive is inhibited by the responsivity of the display panel. That is, it is possible to realize high frame rate drive and reduce blurs in moving images motion-adaptively, and, consequently, provide higher-definition moving images.

### (Embodiment 5)

Hereinafter, an image display apparatus according to Embodiment 5 of the present invention will be explained. The image display apparatus according to the present embodiment employs the same configuration as image display apparatus 100 according to Embodiment 1. Hence, when the same components as in Embodiment 1 will be mentioned, these components will be assigned the same reference numerals and will not be explained in detail.

The present embodiment differs from Embodiment 1 in displaying three frames of interpolating images for one frame of a source image. Further, the present embodiment differs from Embodiment 1 in that, when interpolated image signal generating section 106 generates a display data signal, a scan for displaying the interpolating image is inserted into a scan for displaying one frame of the source image to equalize time intervals for a scan of part of scanning line groups.

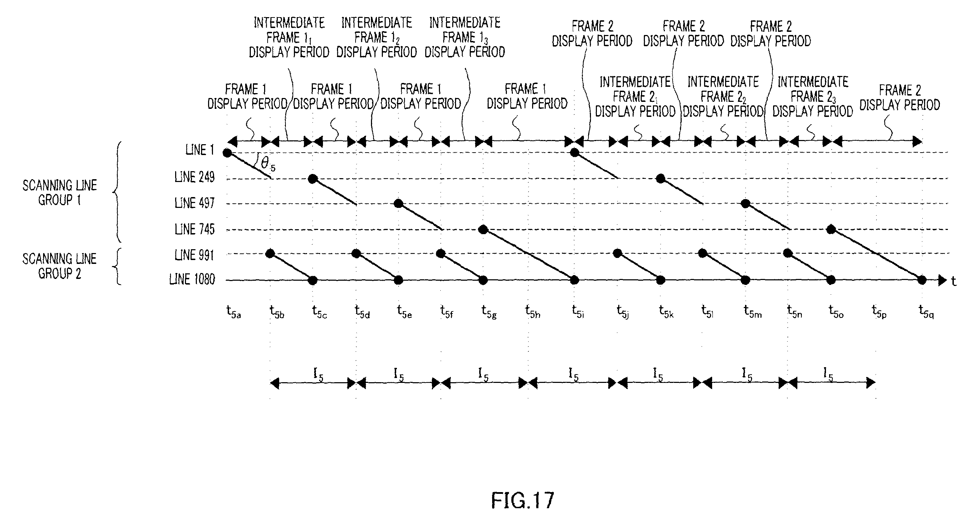

FIG.17 illustrates an example of a scan driving operation according to the present embodiment.

With the example shown in FIG.17, one divisional area (i.e. high rate area) of two divisional areas inside the display area is updated at a high refresh rate compared to the other divisional area, so that the display frame rate is increased. In FIG.17, scanning line group 2 is a group of scanning lines including line 991 to line 1080 corresponding to the divisional area covered by information of the interpolated image signals in the display area. Scanning line group 1 is a group of scanning lines including line 1 to line 990 corresponding to the other divisional area in the display area.

At time t₅ₐ, a scan for displaying frame 1 as a source image based on an input image signal is started from line 1, according to a gate driver control signal based on a corresponding phase signal.

Scanning line group 1 is sequentially scanned following the scan of line 1 at time t₅ₐ, and, at time t_{5b}, the scan for displaying frame 1 is suspended and a scan from line 249 to line 1080 is skipped.

From time t_{5b}, a scan for displaying intermediate frame 1₁ as an interpolating image based on an interpolated image signal is started. That is, a scan from line 991 is started, according to a gate driver control signal based on a corresponding phase signal. A scan of scanning line group 2 is sequentially performed following the scan of line 991, and, when this is finished at time t_{5c}, the scan for displaying intermediate frame 1₁ is finished.

From time t_{5c}, the scan for displaying frame 1, which was suspended previously, is resumed. That is, a scan is started sequentially from line 249, which was skipped previously, according to a gate driver control signal based on a corresponding phase signal. At time t_{5d}, the scan for displaying frame 1 is suspended again and a scan from line 497 to line 1080 is skipped.

From time t_{5d}, a scan for displaying intermediate frame 1₂ as an interpolating image based on an interpolated image signal is started. That is, a scan from line 991 is started, according to a gate driver control signal based on a corresponding phase signal. A scan of scanning line group 2 is sequentially performed following the scan of line 991, and, when this is finished at time t₅ₑ, the scan for displaying intermediate frame 1₂ is finished.

From time t₅ₑ, the scan for displaying frame 1, which was suspended previously, is resumed. That is, a scan is started sequentially from line 497, which was skipped previously, according to a gate driver control signal based on a corresponding phase signal. At time t_{5f}, the scan for displaying frame 1 is suspended again and a scan from line 745 to line 1080 is skipped.

From time t_{5f}, a scan for displaying intermediate frame 1₃ as an interpolating image based on an interpolated image signal is started. That is, a scan from line 991 is started, according to a gate driver control signal based on a corresponding phase signal. A scan of scanning line group 2 is sequentially performed following the scan of line 991, and, when this is finished at time t_{5g}, the scan for displaying intermediate frame 1₃ is finished.

From time t_{5g}, the scan for displaying frame 1, which was suspended previously, is resumed. That is, a scan is started sequentially from line 745, which was skipped previously, according to a gate driver control signal based on a corresponding phase signal.

At time t₅ₕ, the scan of scanning line group 1 for displaying frame 1 is finished, and, subsequently, from time t₅ₕ, a scan of scanning line group 2 for displaying frame 1 is sequentially performed and is finished at time t₅ᵢ.

Thus, a sequential scan of scanning line group 2 performed in the intermediate frame 1₁ display period, the intermediate frame 1₂ display period and the intermediate frame 1₃ display period is inserted in the middle of a sequential scan of all scanning lines performed in the frame 1 display period.

Then, at time t₅ᵢ, a scan for displaying frame 2 as a source image based on an input image signal is started from line 1, according to a gate driver control signal based on a corresponding phase signal.

Scanning line group 1 is sequentially scanned following the scan of line 1 at time t₅ᵢ, and the scan for displaying frame 2 is suspended at time t₅ⱼ and a scan from line 249 to line 1080 is skipped.

From time t₅ⱼ, a scan for displaying intermediate frame 2₁ as an interpolating image based on an interpolated image signal is started. That is, a scan from line 991 is started, according to a gate driver control signal based on a corresponding phase signal. A scan of scanning line group 2 is sequentially performed following the scan of line 991, and, when this is finished at time t₅ₖ, the scan for displaying intermediate frame 2₁ is finished.

From time t₅ₖ, the scan for displaying frame 2, which was suspended previously, is resumed. That is, a scan is started sequentially from line 249, which was skipped previously, according to a gate driver control signal based on a corresponding phase signal. At time t₅ₗ, the scan for displaying frame 2 is suspended again and a scan from line 497 to line 1080 is skipped.

From time t₅ₗ, a scan for displaying intermediate frame 2₂ as an interpolating image based on an interpolated image signal is started. That is, a scan from line 991 is started, according to a gate driver control signal based on a corresponding phase signal. A scan of scanning line group 2 is sequentially performed following the scan of line 991, and, when this is finished at time t₅ₘ, the scan for displaying intermediate frame 2₂ is finished.

From time t₅ₘ, the scan for displaying frame 2, which was suspended previously, is resumed. That is, a scan is started sequentially from line 497, which was skipped previously, according to a gate driver control signal based on a corresponding phase signal. At time t₅ₙ, the scan for displaying frame 2 is suspended again and a scan from line 745 to line 1080 is skipped.

From time t₅ₙ, a scan for displaying intermediate frame 2₃ as an interpolating image based on an interpolated image signal is started. That is, a scan from line 991 is started, according to a gate driver control signal based on a corresponding phase signal. A scan of scanning line group 2 is sequentially performed following the scan of line 991, and, when this is finished at time t₅ₒ, the scan for displaying intermediate frame 2₃ is finished.

From time t₅ₒ, the scan for displaying frame 2, which was suspended previously, is resumed. That is, a scan is started sequentially from line 745, which was skipped previously, according to a gate driver control signal based on a corresponding phase signal.

At time t₅ₚ, the scan of scanning line group 1 for displaying frame 2 is finished, and, subsequently, from time t₅ₚ, a scan of scanning line group 2 for displaying frame 2 is sequentially performed and is finished at time t_{5q}.

Thus, a sequential scan of scanning line group 2 performed in the intermediate frame 2₁ display period, the intermediate frame 2₂ display period and the intermediate frame 2₃ display period is inserted in the middle of a sequential scan of all scanning lines performed in the frame 2 display period.

According to the above scan driving operation, while a source image is displayed by scanning all scanning lines, an interpolating image is displayed by scanning only the scanning lines included in scanning line group 2. Consequently, similar to the above embodiments, the scanning speed for each scanning speed represented by angle θ₅ in FIG.17 is prevented from increasing substantially.

Further, according to the above scan driving operation, a scan of scanning line group 2 in the interpolating image display period is inserted into a scan of all scanning lines in the source image display period. By this means, time intervals I₅ are mutually equal as shown in FIG.17. That is, scanning line group 2 is scanned at equal time intervals. Consequently, it is also possible to realize in the present embodiment the unique advantage realized in Embodiment 2.

### (Embodiment 6)

Hereinafter, an image display apparatus according to Embodiment 6 of the present invention will be explained. The image display apparatus according to the present embodiment employs the same configuration as image display apparatus 100 according to Embodiment 1. Hence, when the same components as in Embodiment 1 will be mentioned, these components will be assigned the same reference numerals and will not be explained in detail.

The present embodiment differs from Embodiment 1 in varying the number of times of scanning between different scanning line groups in the interpolating image display period.

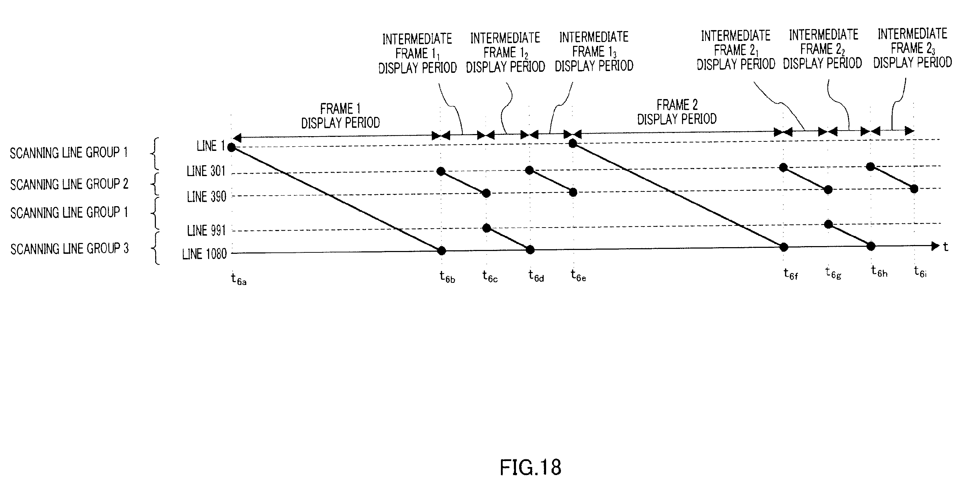

FIG.18 illustrates an example of a scan driving operation according to the present embodiment.

With the example shown in FIG.18, the center area (i.e. a first high rate area) of four divisional areas inside the display area is updated at the highest refresh rate, and the lower area (i.e. a second high rate area) of the four divisional areas inside the display area is updated at the second highest refresh rate, so that the display frame rate is increased. In FIG.18, scanning line group 2 is a group of scanning lines including line 301 to line 390 corresponding to the divisional area covered by information of the interpolated image signals in the display area. Scanning line group 3 is a group of scanning lines including line 991 to line 1080 corresponding to the divisional area covered by information of the interpolated image signals in the display area. Scanning line group 1 is a group of scanning lines including line 1 to 300 line and line 391 to line 990 corresponding to the other area in the display area.

At time t₆ₐ, a scan for displaying frame 1 as a source image based on an input image signal is started from line 1, according to a gate driver control signal based on a corresponding phase signal.

A scan of scanning line group 1 (i.e. line 1 to line 300), scanning line group 2 (i.e. line 301 to line 390), scanning line group 1 (i.e. line 391 to line 990) and scanning line group 3 (i.e. line 991 to line 1080) is sequentially performed following the scan of line 1 at time t₆ₐ, and is finished at time t_{6b}. That is, all scanning lines in the frame 1 display period are sequentially scanned without stopping halfway through.

At time t_{6b}, a scan for displaying intermediate frame 1₁ as an interpolating image based on an interpolated image signal is started from line 301, according to a gate driver control signal based on a corresponding phase signal. Scanning line group 2 is sequentially scanned following the scan of line 301 at time t_{6b}, and, at time t_{6c}, the scan of scanning line group 2 for displaying intermediate frame 1₁ is finished.

At time t_{6c}, a scan for displaying intermediate frame 1₂ as an interpolating image based on an interpolated image signal is started from line 991, according to a gate driver control signal based on a corresponding phase signal. Scanning line group 3 is sequentially scanned following the scan of line 991 at time t_{6c}, and, at time t_{6d}, the scan of scanning line group 3 for displaying intermediate frame 1₂ is finished.

At time t_{6d}, a scan for displaying intermediate frame 1₃ as an interpolating image based on an interpolated image signal is started from line 301, according to a gate driver control signal based on a corresponding phase signal. Scanning line group 2 is sequentially scanned following the scan of line 301 at time t_{6d}, and, at time t₆ₑ, the scan of scanning line group 2 for displaying intermediate frame 1₃ is finished.

Then, at time t₆ₑ, a scan for displaying frame 2 as a source image based on an input image signal is started from line 1, according to a gate driver control signal based on a corresponding phase signal.

A scan of scanning line group 1 (i.e. line 1 to line 300), scanning line group 2 (i.e. line 301 to line 390), scanning line group 1 (i.e. line 391 to line 990) and scanning line group 3 (i.e. line 991 to line 1080) is sequentially performed following the scan of line 1 at time t₆ₑ, and is finished at time t_{6f}. That is, all scanning lines in the frame 2 display period are sequentially scanned without stopping halfway through.

At time t_{6f}, a scan for displaying intermediate frame 2₁ as an interpolating image based on an interpolated image signal is started from line 301, according to a gate driver control signal based on a corresponding phase signal. Scanning line group 2 is sequentially scanned following the scan of line 301 at time t_{6f}, and, at time t_{6g}, the scan of scanning line group 2 for displaying intermediate frame 2₁ is finished.

At time t_{6g}, a scan for displaying intermediate frame 2₂ as an interpolating image based on an interpolated image signal is started from line 991, according to a gate driver control signal based on a corresponding phase signal. Scanning line group 3 is sequentially scanned following the scan of line 991 at time t_{6g}, and, at time t₆ₕ, the scan of scanning line group 3 for displaying intermediate frame 2₂ is finished.

At time t₆ₕ, a scan for displaying intermediate frame 2₃ as an interpolating image based on an interpolated image signal is started from line 301, according to a gate driver control signal based on a corresponding phase signal. Scanning line group 2 is sequentially scanned following the scan of line 301 at time t₆ₕ, and, at time t₆ᵢ, the scan of scanning line group 2 for displaying intermediate frame 2₃ is finished.

According to the above scan driving operation, while a source image is displayed by scanning all scanning lines, an interpolating image is displayed by scanning only the scanning lines included in scanning line group 2 and scanning line group 3. Consequently, similar to the above embodiments, it is possible to prevent the scanning speed for each scanning line from increasing substantially.

Further, scanning line group 2 is scanned twice between the frame 1 display period and the frame 2 display period, and scanning line group 3 is scanned once between the frame 1 display period and the frame 2 display period. By this means, it is possible to provide further higher-definition moving images.

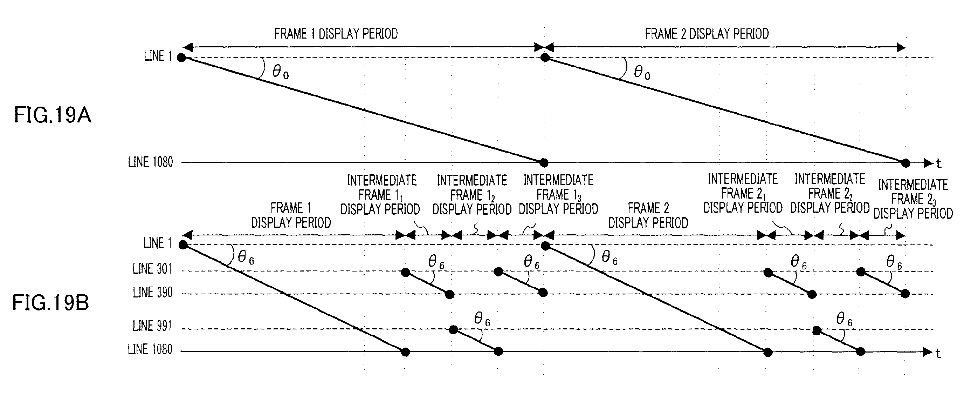

The advantage of suppressing the substantial increase in scanning speed is obvious with reference to FIG.19. FIG.19 compares a conventional scan driving operation and a scan driving operation according to the present embodiment, and FIG.19A shows the former and FIG.19B shows the latter. The conventional technique illustrated in FIG.19A for comparison is the above constant-speed line sequential drive in which an interpolating image is not displayed per time equivalent to one frame period of an input image signal, and the display frame rate is not increased. By contrast with this, with the present embodiment, an interpolating image is displayed per time equivalent to one frame period of an input image signal, and the display frame rate is increased. Therefore, angle θ₆ representing the scanning speed of the present embodiment is greater than θ₀ representing the scanning speed of a conventional technique. However, the range to repeat scanning for displaying an interpolating image is limited only to part of scanning lines, and therefore there is no significant difference between angle θ₆ and angle θ₀. The line scanning period of the present embodiment calculated based on the above precondition is about 12.3 µs, so that it is possible to secure a sufficiently long line scanning period similar to above embodiments. Consequently, it is possible to reduce the possibility that high frame rate drive is inhibited by the responsivity of the display panel. That is, it is possible to realize high frame rate drive and reduce blurs in moving images motion-adaptively, and, consequently, provide higher-definition moving images.

Note that, with the present embodiment, the order to scan scanning line group 2 and scanning line group 3 is not limited to this. For example, it is equally possible to scan scanning line group 3 after the frame 1 display period and then scan scanning line group 2 twice. Further, it is equally possible to scan scanning line group 2 twice after the frame 1 display period and then scan scanning line group 3.

### (Embodiment 7)

Hereinafter, an image display apparatus according to Embodiment 7 of the present invention will be explained. The image display apparatus according to the present embodiment employs the same configuration as image display apparatus 100 according to Embodiment 1. Hence, when the same components as in Embodiment 1 will be mentioned, these components will be assigned the same reference numerals and will not be explained in detail.

The present embodiment differs from Embodiment 1 in scanning all scanning lines or scanning part of scanning lines in the interpolating image display period.

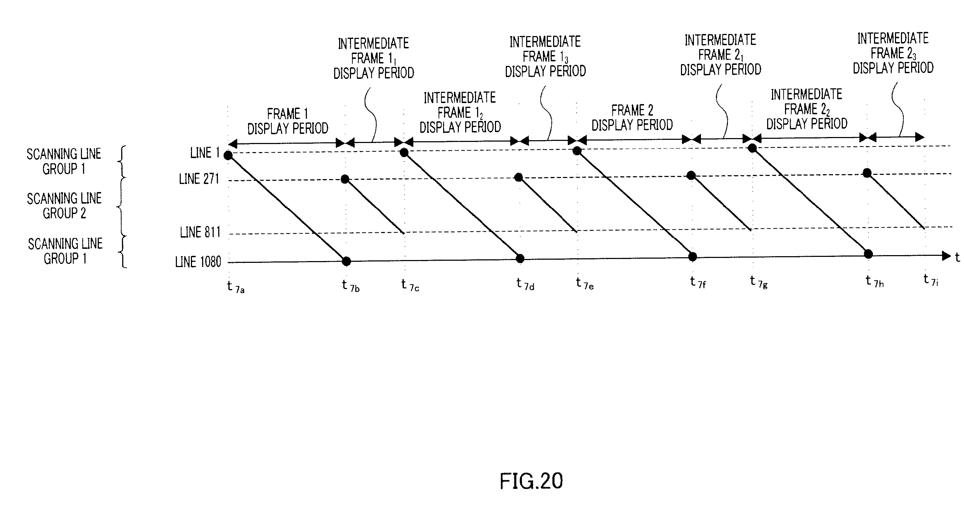

FIG.20 illustrates an example of a scan driving operation according to the present embodiment.

With the example shown in FIG.20, one divisional area (i.e. high rate area) of two divisional areas inside the display area is updated at a high refresh rate compared to the other divisional area, so that the display frame rate is increased. In FIG.20, scanning line group 1 is a group of scanning lines including line 1 to line 270 and line 811 to line 1080, and scanning line group 2 is a group of scanning lines including the rest of scanning lines, that is, line 271 to line 810.

At time t₇ₐ, a scan for displaying frame 1 as a source image based on an input image signal is started from line 1, according to a gate driver control signal based on a corresponding phase signal.

A scan is sequentially performed in order of part of scanning line group 1 , scanning line group 2 and the rest of scanning line group 1, following the scan of line 1 at time t₇ₐ, and is finished at time t_{7b}. That is, all scanning lines in the frame 1 display period are sequentially scanned without stopping halfway through.

Then, a scan for sequentially displaying intermediate frame 1₁, intermediate frame 1₂ and intermediate frame 1₃ is performed. Here, the base interpolated image signals f or intermediate frame 1₁, intermediate frame 1₂ and intermediate frame 1₃ are generated from the frame 1 input image signal and the frame 2 input image signal to compensate for the motion between frame 1 and frame 2, and are sequentially interpolated between these two input image signals. Further, the base interpolated image signal for intermediate frame 1₂ includes an amount of information to cover the entire area of the display area. The base interpolated image signals for intermediate frame 1₁ and intermediate frame 1₃ include an amount of information to cover only a partial area of the display area.

At time t_{7b}, a scan for displaying intermediate frame 1₁ as an interpolating image based on an interpolated image signal is started from line 271, according to a gate driver control signal based on a corresponding phase signal. Scanning line group 2 is sequentially scanned following the scan of line 271 at time t_{7b}, and, at time t_{7c}, the scan for displaying intermediate frame 1₁ is finished.

At time t_{7c}, a scan for displaying intermediate frame 1₂ as the interpolating image based on the input image signal is started from line 1, according to a gate driver control signal based on a corresponding phase signal. Part of scanning line group 1, scanning line group 2 and the rest of scanning line group 1 are sequentially scanned following the scan of line 1 at time t_{7c}, and, at time t_{7d}, the scan for displaying intermediate frame 1₂ is finished.

At time t_{7d}, a scan for displaying intermediate frame 1₃ as an interpolating image based on an interpolated image signal is started from line 271, according to a gate driver control signal based on a corresponding phase signal. Scanning line group 2 is sequentially scanned following the scan of line 271 at time t_{7d}, and, at time t₇ₑ, the scan for displaying intermediate frame 1₃ is finished.

Then, at time t₇ₑ, a scan for displaying frame 2 as a source image based on an input image signal is started from line 1, according to a gate driver control signal based on a corresponding phase signal.

A scan is sequentially performed in order of part of scanning line group 1, scanning line group 2 and the rest of scanning line group 1, following the scan of line 1 at time t₇ₑ, and is finished at time t_{7f}. That is, all scanning lines in the frame 2 display period are sequentially scanned without stopping halfway through.

Then, a scan for sequentially displaying intermediate frame 2₁, intermediate frame 2₂ and intermediate frame 2₃ is performed. Here, the base interpolated image signals f or intermediate frame 2₁, intermediate frame 2₂ and intermediate frame 2₃ are generated from the frame 2 input image signal and the frame 3 input image signal to compensate for the motion between frame 2 and frame 3, and are sequentially interpolated between these two input image signals. Further, the base interpolated image signal for intermediate frame 2₂ includes an amount of information to cover the entire area of the display area. The base interpolated image signals s for intermediate frame 2₁ and intermediate frame 2₃ include an amount of information to cover only a partial area of the display area.

At time t_{7f}, a scan for displaying intermediate frame 2₁ as an interpolating image based on an interpolated image signal is started from line 271, according to a gate driver control signal based on a corresponding phase signal. Scanning line group 2 is sequentially scanned following the scan of line 271 at time t_{7f}, and, at time t_{7g}, the scan for displaying intermediate frame 2₁ is finished.

At time t_{7g}, a scan for displaying intermediate frame 2₂ as an interpolating image based on the interpolated image signal is started from line 1, according to a gate driver control signal based on a corresponding phase signal. A scan is sequentially performed in order of part of scanning line group 1, scanning line group 2 and the rest of scanning line group 1, following the scan of line 1 at time t_{7g}, and, at time t₇ₕ, the scan for displaying intermediate frame 2₂ is finished.

At time t₇ₕ, a scan for displaying intermediate frame 2₃ as an interpolating image based on an interpolated image signal is started from line 271, according to a gate driver control signal based on a corresponding phase signal. Scanning line group 2 is sequentially scanned following the scan of line 271 at time t₇ₕ, and, at time t₇ᵢ, the scan for displaying intermediate frame 2₃ is finished.

According to the above scan driving operation, the source image is displayed by scanning all scanning lines, part of interpolating images are displayed by scanning all scanning lines in the same way the source image is displayed and other interpolating images are displayed by scanning only scanning lines included in scanning line group 2. Consequently, similar to the above embodiments, it is possible to prevent the scanning speed for each scanning line from increasing substantially.

Further, part of interpolating images are displayed by scanning all scanning lines in the same way the source image is displayed, so that it is possible to provide the same advantage as conventional double-speed line sequential drive in the display area scanned by scanning line group 1 , and provide the same advantage as conventional quadruple-speed line sequential drive in the display area scanned by scanning line group 2.

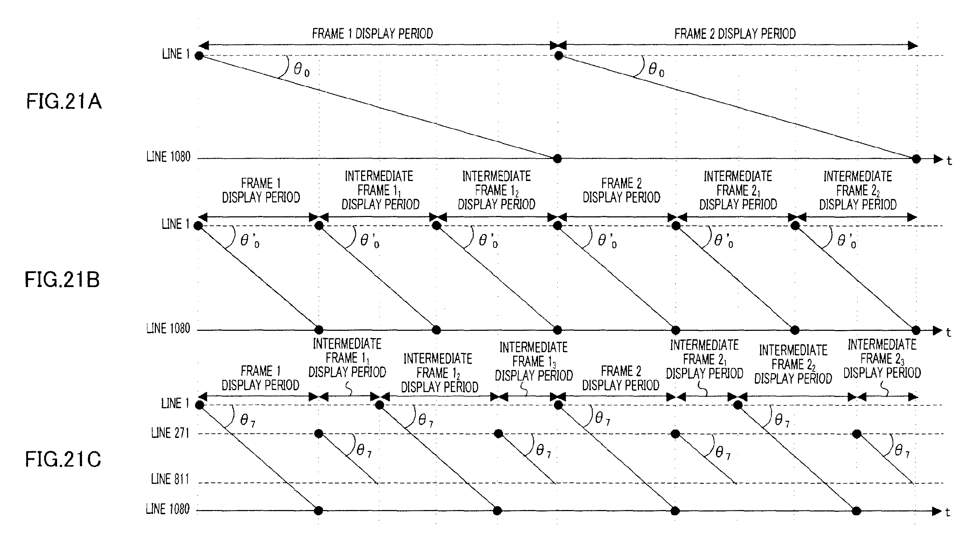

The advantage of suppressing the substantial increase in scanning speed is obvious with reference to FIG.21. FIG.21 compares a conventional scan driving operation and a scan driving operation according to the present embodiment, and FIG.21 A shows the former and FIG.21C shows the latter. The conventional technique illustrated in FIG.21B for comparison is triple-speed line sequential drive, and an interpolating image is displayed per time equivalent to one frame period of an input image signal and the display frame rate is increased three times. By contrast with this, with the present embodiment, an interpolating image is displayed per time equivalent to one frame period of an input image signal, and the display frame rate is increased more than three times. Although, with the present embodiment, the display frame rate is increased more than the conventional technique, it is obvious that angle θ₇ representing the scanning speed is greater than θ'₀ representing the scanning speed of a conventional technique. Consequently, it is possible to reduce the possibility that high frame rate drive is inhibited by the responsivity of the display panel. That is, it is possible to realize high frame rate drive and reduce blurs in moving images motion-adaptively, and, consequently, provide higher-definition moving images.

Note that, with the present embodiment, it is possible to display the source image only once in a time equivalent to the one frame period of an input image signal. However, it is possible to display an interpolating image, which is displayed by scanning all scanning lines similar to the source image, once or more in the same period of time. It is also possible to display an interpolating image, which is displayed by scanning only scanning lines included in part of scanning line groups, once or more in the same period of time.

### (Embodiment 8)

Hereinafter, an image display apparatus according to Embodiment 8 of the present invention will be explained. The image display apparatus according to the present embodiment employs the same configuration as image display apparatus 100 according to Embodiment 1. Hence, when the same components as in Embodiment 1 will be mentioned, these components will be assigned the same reference numerals and will not be explained in detail.

The present embodiment differs from Embodiment 7 in not necessarily starting scanning frames from line 1 in the display period of the source image and in the display period of an interpolating image including an amount of information to cover the entire area like the source image.

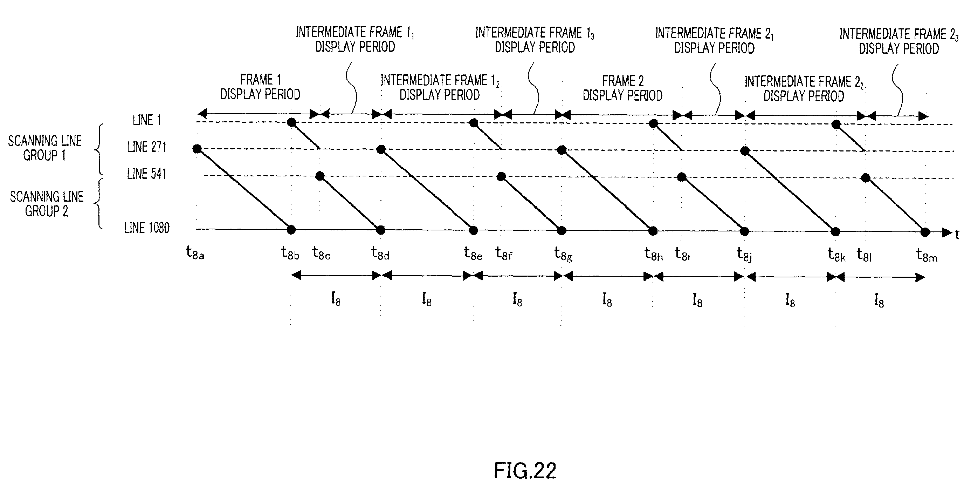

FIG.22 illustrates an example of a scan driving operation according to the present embodiment.

With the example shown in FIG.22, one divisional area (i.e. high rate area) of two divisional areas inside the display area is updated at a high refresh rate compared to the other divisional area, so that the display frame rate is increased. In FIG.22, scanning line group 1 is a group of scanning lines including line 1 to line 540, and scanning line group 2 is a group of scanning lines including the rest of scanning lines, that is, line 541 to line 1080.

At time t₈ₐ, a scan for displaying frame 1 as a source image based on an input image signal is started from line 271, according to a gate driver control signal based on a corresponding phase signal.

A scan of scanning line group 1 and scanning line group 2 is sequentially performed following the scan of line 271 at time t₈ₐ, and is finished up to line 1080 at time t_{8b}. Further, a scan from line 1 to line 270 of scanning line group 1 is performed, and is finished at time t_{8c}. That is, all scanning lines in the frame 1 display period are sequentially scanned without stopping halfway, starting from line 271 toward line 270 passing through line 1080 and line 1.

Then, a scan for sequentially displaying intermediate frame 1₁, intermediate frame 1₂ and intermediate frame 1₃ is performed. Here, the base interpolated image signals f or intermediate frame 1₁, intermediate frame 1₂ and intermediate frame 1₃ are generated from the frame 1 input image signal and the frame 2 input image signal to compensate for the motion between frame 1 and frame 2, and are sequentially interpolated between these two input image signals. Further, the base interpolated image signal for intermediate frame 1₂ includes an amount of information to cover the entire area of the display area. The base interpolated image signals for intermediate frame 1₁ and intermediate frame 1₃ include an amount of information to cover only a partial area of the display area.

At time t_{8c}, a scan for displaying intermediate frame 1₁ as an interpolating image based on an interpolated image signal is started from line 541, according to a gate driver control signal based on a corresponding phase signal. Scanning line group 2 is sequentially scanned following the scan of line 541 at time t_{8c}, and, at time t_{8d}, the scan of scanning line group 1 for displaying intermediate frame 1₁ is finished.

At time t_{8d}, a scan for displaying intermediate frame 1₂ as an interpolating image based on an interpolated image signal is started from line 271, according to a gate driver control signal based on a corresponding phase signal. A scan of scanning line group 1 and scanning line group 2 is sequentially performed following the scan of line 271 at time t_{8d}, and is finished up to line 1080 at time t₈ₑ. Further, line 1 to line 270 of scanning line group 1 are sequentially scanned, and, at time t_{8f}, the scan for displaying intermediate frame 1₂ is finished.

At time t_{8f}, a scan for displaying intermediate frame 1₃ as an interpolating image based on an interpolated image signal is started from line 541, according to a gate driver control signal based on a corresponding phase signal. Scanning line group 2 is sequentially scanned following the scan of line 541 at time t_{8f}, and, at time t_{8g}, the scan for displaying intermediate frame 1₃ is finished.

Then, at time t_{8g}, a scan for displaying frame 2 as a source image based on an input image signal is started from line 271, according to a gate driver control signal based on a corresponding phase signal.

A scan of scanning line group 1 and scanning line group 2 is sequentially performed following the scan of line 271 at time t_{8g}, and is finished up to line 1080 at time t₈ₕ. Further, a scan from line 1 to line 270 of scanning line group 1 is performed, and is finished at time t₈ᵢ. That is, all scanning lines in the frame 2 display period are sequentially scanned without stopping halfway, starting from line 271 toward line 270 passing through line 1080 and line 1.

Then, a scan for sequentially displaying intermediate frame 2₁, intermediate frame 2₂ and intermediate frame 2₃ is performed. Here, the base interpolated image signals for intermediate frame 2₁, intermediate frame 2₂ and intermediate frame 2₃ are generated from the frame 2 input image signal and the frame 3 input image signal to compensate for the motion between frame 2 and frame 3, and are sequentially interpolated between these two input image signals. Further, the base interpolated image signal for intermediate frame 2₂ includes an amount of information to cover the entire area of the display area. The base interpolated image signals for intermediate frame 2₁ and intermediate frame 2₃ include an amount of information to cover only a partial area of the display area.

At time t₈ᵢ, a scan for displaying intermediate frame 2₁ as an interpolating image based on an interpolated image signal is started from line 541, according to a gate driver control signal based on a corresponding phase signal. Scanning line group 2 is sequentially scanned following the scan of line 541 at time t₈ᵢ, and, at time t₈ⱼ, the scan for displaying intermediate frame 2₁ is finished.

At time t₈ⱼ, a scan for displaying intermediate frame 2₂ as an interpolating image based on an interpolated image signal is started from line 271, according to a gate driver control signal based on a corresponding phase signal. A scan of scanning line group 1 and scanning line group 2 is sequentially performed following the scan of line 271 at time t₈ᵢ, and is finished up to line 1080 at time t₈ₖ. Further, line 1 to line 270 of scanning line group 1 are scanned, and, at time t₈ₗ, the scan for displaying intermediate frame 2₂ is finished.

At time t₈ₗ, a scan for displaying intermediate frame 2₃ as an interpolating image based on an interpolated image signal is started from line 541, according to a gate driver control signal based on a corresponding phase signal. Scanning line group 2 is sequentially scanned following the scan of line 541 at time t₈ₗ, and, at time t₈ₘ, the scan for displaying intermediate frame 2₃ is finished.

According to the above scan driving operation, the source image is displayed by scanning all scanning lines, part of interpolating images are displayed by scanning all scanning lines in the same way the source image is displayed and other interpolating images are displayed by scanning only scanning lines included in scanning line group 2. Consequently, similar to Embodiment 7, it is possible to prevent the scanning speed for each scanning line from increasing substantially.

Further, according to the above scan driving operation, the scan of each frame is started from line 271 in a display period of the source image and in a display period of an interpolating image including an amount of information to cover the entire area like the source image.

By this means, time intervals I₈ to scan scanning line group 2 are equalized as shown in FIG.22. To be more specific, time intervals I₈ are about 4.2 ms.

As described below, it is possible to calculate an adequate line to start scanning frames in the display period of the source image and in the display period of an interpolating image including an amount of information to cover the entire area like the source image.

Assume that the number of lines in the entire area is A, the number of lines in a high rate area is B and the head line in the high rate area is C. In this case, the scan start positions (i.e. scan start lines) for the source image and the interpolating image to cover the entire area like the source image are desirably set to lines (C-0.5×(A-B)) in case where C>(A-B)÷2 is satisfied. Further, the scan start positions are desirably set to lines (C+0.5×(A+B)) in case where C≤(A-B)÷2 is satisfied. That is, based on the number of lines and the head line of scanning line groups corresponding to the high rate area, the scan start lines for the source image and the interpolating image to cover the entire area like the source image are set. In case where the high rate area is changed, for example, motion-adaptively, the scan start line is reset according to the above configuration.

Note that, if calculation produces fractions below the decimal point, the fractions may be rounded arbitrarily to make the solution a positive integer equal to or less than A.

Consequently, according to the present embodiment, for scanning line group 2 set in an arbitrary position, it is possible to reduce the possibility that high frame rate drive is inhibited by the responsivity of the display panel. That is, it is possible to realize high frame rate drive and reduce blurs in moving images motion-adaptively, and, consequently, provide higher-definition moving images.

The features of the present embodiment, particularly, a feature of setting scan start lines variably for a source image and an interpolating image to cover the entire area like the source image, can be appropriately combined with the features of the above embodiments and realized.

### (Embodiment 9)

Hereinafter, an image display apparatus according to Embodiment 9 of the present invention will be explained. The image display apparatus according to the present embodiment employs the same configuration as image display apparatus 100 according to Embodiment 1. Hence, when the same components as in Embodiment 1 will be mentioned, these components will be assigned the same reference numerals and will not be explained in detail.

The present embodiment is similar to Embodiment 3 in that, when interpolated image signal generating section 106 generates a display data signal, a scan for displaying an interpolating image is inserted into a scan for displaying the source image to equalize time intervals to scan part of scanning line groups. However, the present embodiment differs from Embodiment 3 in performing only scanning for displaying an interpolating image display in the partial display area, and not performing scanning for displaying the source image in the partial display area. Further, the present embodiment differs from the above embodiments in that the source image does not cover the entire area.

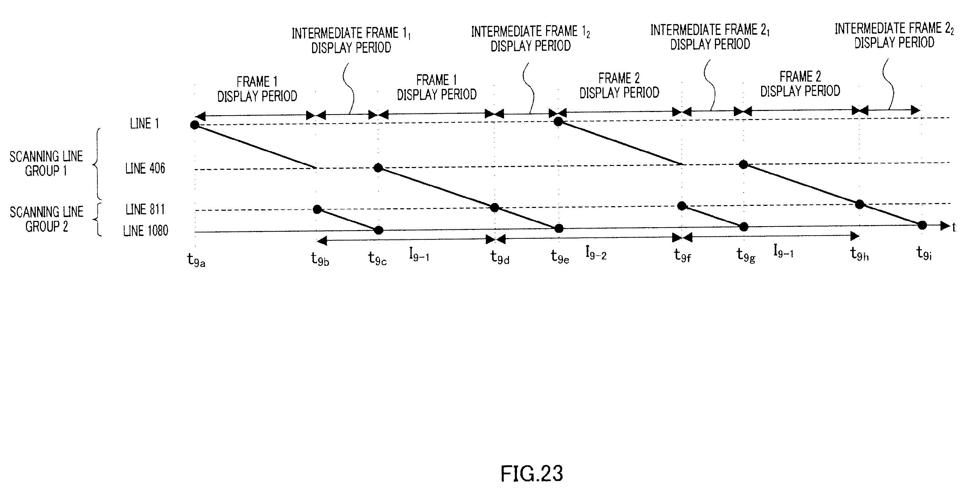

FIG.23 illustrates an example of a scan driving operation according to the present embodiment.

With the example shown in FIG.23, one divisional area (i.e. high rate area) of two divisional areas inside the display area is updated at a high refresh rate compared to the other divisional area, so that the display frame rate is increased. In FIG.23, scanning line group 2 is a group of scanning lines including line 811 to line 1080 corresponding to the divisional area covered by information of the interpolated image signals in the display area. Scanning line group 1 is a group of scanning lines including line 1 to line 810 corresponding to the other divisional area in the display area.

At time t₉ₐ, a scan for displaying frame 1 as a source image based on an input image signal is started from line 1, according to a gate driver control signal based on a corresponding phase signal. Scanning line group 1 is sequentially scanned following the scan of line 1 at time t₉ₐ. Then, at time t_{9b}, when a scan up to line 405 for displaying frame 1 is finished, the scan for displaying frame 1 i suspended and a scan from line 406 to line 810 is skipped.

From time t_{9b}, a scan for displaying intermediate frame 1₁, as an interpolating image based on an interpolated image signal is started. That is, a scan from line 811 is started, according to a gate driver control signal based on a corresponding phase signal. A scan of scanning line group 2 is sequentially performed following the scan of line 811, and, when this is finished at time t_{9c}, the scan for displaying intermediate frame 1₁ is finished.

From time t_{9c}, the scan for displaying frame 1, which was suspended previously, is resumed. That is, a scan from line 406 to line 810, which were skipped previously, is sequentially performed according to a gate driver control signal based on a corresponding phase signal, and is finished at time t_{9d}. That is, a sequential scan of scanning line group 2 performed in the intermediate frame 1₁ display period is inserted in the middle of a sequential scan of line 1 to line 810 performed in the frame 1 display period. Further, a scan for displaying frame 1, which is the source image, is not performed in scanning line group 2.

From time t_{9d}, a scan for displaying intermediate frame 1₂ as an interpolating image based on an interpolated image signal is started. That is, a scan from line 811 is started, according to a gate driver control signal based on a corresponding phase signal. A scan of scanning line group 2 is sequentially performed following the scan of line 811, and, when this is finished at time t₉ₑ, the scan for displaying intermediate frame 1₂ is finished.

Then, at time t₉ₑ, a scan for displaying frame 2 as a source image based on an input image signal is started from line 1, according to a gate driver control signal based on a corresponding phase signal. Scanning line group 1 is sequentially scanned following the scan of line 1 at time t₉ₑ. Then, at time t_{9f}, when a scan up to line 405 for displaying frame 2 is finished, the scan for displaying frame 2 is suspended and a scan from line 406 to line 810 is skipped.

From time t_{9f}, a scan for displaying intermediate frame 2₁ as an interpolating image based on an interpolated image signal is started. That is, a scan from line 811 is started, according to a gate driver control signal based on a corresponding phase signal. A scan of scanning line group 2 is sequentially performed following the scan of line 811, and, when this is finished at time t_{9g}, the scan for displaying intermediate frame 2₁ is finished.

From time t_{9g}, the scan for displaying frame 2, which was suspended previously, is resumed. That is, a scan from line 406 to line 810, which were skipped previously, is sequentially performed according to a gate driver control signal based on a corresponding phase signal, and is finished at time t₉ₕ. That is, a sequential scan of scanning line group 2 performed in the intermediate frame 2₁ display period is inserted in the middle of a sequential scan of line 1 to line 810 performed in the frame 2 display period. Further, a scan for displaying frame 2, which is the source image, is not performed in scanning line group 2.

From time t₉ₕ, a scan for displaying intermediate frame 2₂ as an interpolating image based on an interpolated image signal is started. That is, a scan from line 811 is started, according to a gate driver control signal based on a corresponding phase signal. A scan of scanning line group 2 is sequentially performed following the scan of line 811, and, when this is finished at time t₉ᵢ, the scan for displaying intermediate frame 2₂ is finished.

Note that, to avoid performing a scan of scanning line group 2 for displaying the source image, in the above scan driving operation, an input image signal may be processed to include an amount of information to cover only a partial area of the display area.

According to the above scan driving operation, an interpolating image is displayed by scanning only the scanning lines included in scanning line group 2 which is part of scanning line groups. Further, in the time equivalent to one frame period of an input image signal, while a source image frame is scanned N times (where N is an integer equal to or greater than 1), an interpolating image frame is scanned M times (where M is an integer greater than N). Accompanying this, the source image is displayed by scanning only scanning lines included in scanning line group 1, which is part of scanning line groups, not including scanning line group 2. Consequently, similar to the above embodiments, it is possible to prevent the scanning speed for each scanning line from increasing substantially.

Further, according to the above scan driving operation, the scan of scanning line group 2 in the interpolating image display period is inserted into a scan of scanning line group 1 in the source image display period.

The time intervals from the time each line is scanned and displayed to the time the same line is scanned and displayed again are preferably equal. For example, focusing on line 811 in FIG.23, time interval I₉-₁ and time interval I₉-₂ are preferably equal. Further, as explained using FIG.8 of above Embodiment 1 and FIG.11 of above Embodiment 2, an interpolated image signal is generated according to time intervals to scan and display each interpolating image.

By introducing the above insertion to equalize time intervals to scan scanning line group 2, it is also possible to realize in the present embodiment the unique advantage realized in Embodiment 2.

Note that the features of the present embodiment, particularly, a feature of displaying the source image by scanning only scanning lines included in part of scanning line groups, can be appropriately combined with the features of the above embodiments and realized.

### (Embodiment 10)

Hereinafter, an image display apparatus according to Embodiment 10 of the present invention will be explained. The image display apparatus according to the present embodiment employs the same configuration as image display apparatus 100 according to Embodiment 1. Hence, when the same components as in Embodiment 1 will be mentioned, these components will be assigned the same reference numerals and will not be explained in detail.

The present embodiment is similar to Embodiment 3 in that, when interpolated image signal generating section 106 generates a display data signal, a scan for displaying one image is inserted into a scan for displaying another image to equalize time intervals to scan part of scanning line groups. However, the present embodiment differs from Embodiment 3 in displaying only interpolating images, and not displaying source images.

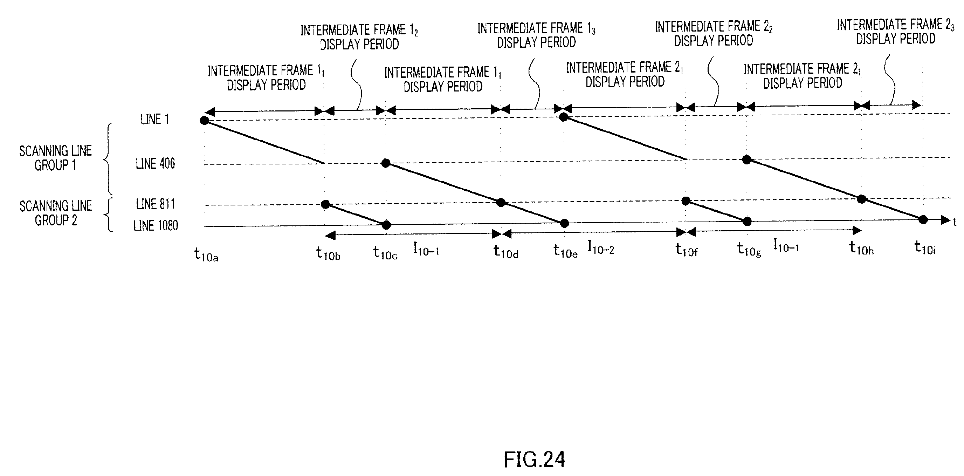

FIG.24 illustrates an example of a scan driving operation according to the present embodiment.

With the example shown in FIG.24, one divisional area (i.e. high rate area) of two divisional areas inside the display area is updated at a high refresh rate compared to the other divisional area, so that the display frame rate is increased. In FIG.24, scanning line group 2 is a group of scanning lines including line 811 to line 1080, and scanning line group 1 is a group of scanning lines including the other scanning lines, that is, line 1 to line 810.

At time t₁₀ₐ, a scan for displaying intermediate frame 1₁ as an interpolating image based on the interpolated image signal is started from line 1, according to a gate driver control signal based on a corresponding phase signal. Scanning line group 1 is sequentially scanned following the scan of line 1 at time t₁₀ₐ. Then, at time t_{10b}, when a scan up to line 405 for displaying intermediate frame 1₁ is finished, the scan for displaying intermediate frame 1₁ is suspended and a scan from line 406 to line 1080 is skipped.

From time t_{10b}, a scan for displaying intermediate frame 1₂ as an interpolating image based on an interpolated image signal is started. That is, a scan from line 811 is started, according to a gate driver control signal based on a corresponding phase signal. A scan of scanning line group 2 is sequentially performed following the scan of line 811, and, when this is finished at time t_{10c}, the scan for displaying intermediate frame 1₂ is finished.

From time t_{10c}, the scan for displaying intermediate frame 1₁, which was suspended previously, is resumed. That is, a scan from line 406 to line 810, which were skipped previously, is sequentially performed, according to a gate driver control signal based on a corresponding phase signal, and is finished at time t_{10d}. That is, a sequential scan of scanning line group 2 performed in the intermediate frame 1₂ display period is inserted in the middle of a sequential scan of line 1 to line 810 performed in the intermediate frame 1₁ display period.

From time t_{10d}, a scan for displaying intermediate frame 1₃ as an interpolating image based on an interpolated image signal is started. That is, a scan from line 811 is started, according to a gate driver control signal based on a corresponding phase signal. A scan of scanning line group 2 is sequentially performed following the scan of line 811, and, when this is finished at time t₁₀ₑ, the scan for displaying intermediate frame 1₃ is finished.

Then, at time t₁₀ₑ, a scan for displaying intermediate frame 2₁ as an interpolating image based on the interpolated image signal is started from line 1, according to a gate driver control signal based on a corresponding phase signal. Scanning line group 1 is sequentially scanned following the scan of line 1 at time t₁₀ₑ. Then, at time t_{10f}, when a scan up to line 405 for displaying intermediate frame 2₁ is finished, the scan for displaying intermediate frame 2₁ is suspended and a scan from line 406 to line 810 is skipped.

From time t_{10f}, a scan for displaying intermediate frame 2₂ as an interpolating image based on an interpolated image signal is started. That is, a scan from line 811 is started, according to a gate driver control signal based on a corresponding phase signal. A scan of scanning line group 2 is sequentially performed following the scan of line 811, and, when this is finished at time t_{10g}, the scan for displaying intermediate frame 2₂ is finished.

From time t_{10g}, the scan for displaying intermediate frame 2₁, which was suspended previously, is resumed. That is, a scan from line 406 to line 810, which were skipped previously, is sequentially performed according to a gate driver control signal based on a corresponding phase signal, and is finished at time t₁₀ₕ. That is, a sequential scan of scanning line group 2 performed in the intermediate frame 2₂ display period is inserted in the middle of a sequential scan of line 1 to line 810 performed in the intermediate frame 2₁ display period.

From time t₁₀ₕ, a scan for displaying intermediate frame 2₃ as an interpolating image based on an interpolated image signal is started. That is, a scan from line 811 is started, according to a gate driver control signal based on a corresponding phase signal. A scan of scanning line group 2 is sequentially performed following the scan of line 811, and, when this is finished at time t₁₀ᵢ, the scan for displaying intermediate frame 2₃ is finished.

According to the above scan driving operation, a specific interpolating image is displayed by scanning only scanning lines included in scanning line group 2 which is part of scanning line groups. Further, in the time equivalent to one frame period of an input image signal, while a frame of another interpolating image is scanned N times, a frame of a specific interpolating image is scanned M times. Accompanying this, another interpolating image is displayed by scanning only scanning lines included in scanning line group 1, which is part of scanning line group, not including scanning line group 2. Further, a specific interpolating image and another interpolating image cover the entire display area in a complementary fashion to secure certain image quality, so that the source image is not displayed. Consequently, similar to the above embodiments, it is possible to prevent the scanning speed for each scanning line from increasing substantially.

Further, according to the above scan driving operation, a scan of scanning line group 2 in the specific interpolating image display period is inserted into a scan of scanning line group 1 in the another interpolating image display period.

Time intervals between the time each line is scanned and displayed and the time the same line is scanned and displayed again are preferably equal. For example, focusing on line 811 in FIG.24, time interval I₁₀₋₁ and time interval I₁₀₋₂ are preferably equal. Further, as explained using FIG.8 of above Embodiment 1 and FIG.11 of above Embodiment 2, an interpolated image signal is generated according to time intervals to scan and display each interpolating image.

By introducing the above insertion to equalize time intervals to scan scanning line group 2, it is also possible to realize in the present embodiment the unique advantage realized in Embodiment 2.

Note that the features of the present embodiment, particularly, a feature of not displaying the source image, can be appropriately combined with features of the above embodiments and realized.

Embodiments the present invention have been explained above.

Note that the above explanation is an illustration of preferable embodiments of the present invention, and the scope of the present invention is not limited to these. That is, explanation as to the configuration and operation of the above apparatus is an example, and it is obvious that various modifications and additions are possible with respect to these examples within the scope of the present invention.

Although a liquid crystal display apparatus using a liquid crystal panel has been explained as an example of an image display apparatus with the above embodiments, the present invention is applicable to various matrix-type display apparatuses such as organic electroluminescence display apparatuses using organic electroluminescence panels.

The disclosure of Japanese Patent Application No. 2009-036923, filed on February 19, 2009, including the specification, drawings and abstract, is incorporated herein by reference in its entirety.

### Industrial Applicability

The image display apparatus and the image display method according to the present invention can provide higher-definition moving images, and are useful as the image display apparatus and the image display method that display moving images.

### Reference Signs List

- 100: IMAGE DISPLAY APPARATUS
- 101: IMAGE PROCESSOR
- 102: DISPLAY PANEL CONTROLLING CIRCUIT
- 103: GATE DRIVER
- 104: SOURCE DRIVER
- 105: DISPLAY PANEL
- 106: INTERPOLATED IMAGE SIGNAL GENERATING SECTION
- 107: DISPLAY AREA
- 108-1, 108-2, 108-n, 108-N: SCANNING LINE
- 109-1, 109-2, 109-m, 109-M: DATA LINE

## Claims

1. An image display apparatus comprising:
a signal processing section that generates an interpolated image signal from an input image signal; and
a display section that comprises a display area, and that sequentially displays, in the display area, images including at least one of a source image based on the input image signal and an interpolating image based on the interpolated image signal,
wherein the display section displays the images at a higher rate in a specific divisional area in the display area than in a further divisional area in the display area.

2. The image display apparatus according to claim 1, wherein the specific divisional area is determined in advance or is selected motion-adaptively.

3. The image display apparatus according to claim 1, wherein the specific divisional area comprises a lower part in the display area.

4. The image display apparatus according to claim 1, wherein:
the display section comprises a plurality of scanning lines:
the image display apparatus further comprises a scanning section that scans the plurality of scanning lines to display the images in the display area; and
the scanning section scans a same scanning line at equal time intervals in a high rate area which is the specific divisional area for displaying the images at the higher rate than in the further divisional area.

5. The image display apparatus according to claim 1, wherein:
the display section comprises a plurality of scanning lines:
the image display apparatus further comprises a scanning section that scans the plurality of scanning lines to display the images in the display area;
the scanning section performs a scan driving operation within a time equivalent to one frame period of input image signals, the scan driving operation including:
a first operation of scanning a scanning line group corresponding to part or entirety of the display area; and
a second operation of scanning a scanning line group corresponding to a high rate area which is the specific divisional area for displaying the images at the higher rate than in the further divisional area;
the part of the display area comprises the high rate area and a divisional area other than the high rate area; and
in the first operation, the scanning section inserts a scan of a scanning line group corresponding to the high rate area, into a scan of a scanning line group corresponding to the divisional area other than the high rate area.

6. The image display apparatus according to claim 1, wherein:
the display section comprises a plurality of scanning lines:
the image display apparatus further comprises a scanning section that scans the plurality of scanning lines to display the images in the display area;
the scanning section performs scan driving operation within a time equivalent to one frame period of input image signals, the scan driving operation including:
a first operation of scanning a scanning line group corresponding to part or entirety of the display area; and
a second operation of scanning a scanning line group corresponding to a high rate area which is the specific divisional area for displaying the images at the higher rate than in the further divisional area;
the part of the display area comprises the high rate area and a divisional area other than the high rate area; and
the scanning section inserts the second operation into the first operation.

7. The image display apparatus according to claim 6, wherein the signal processing section generates the interpolated image signal from an input image signal received as input earlier and an input image signal received as input later, and interpolates the interpolated image signal generated from the input image signal received as input earlier and the input image signal received as input later, in the input image signal received as input later.

8. The image display apparatus according to claim 1, wherein:
the display section comprises a plurality of scanning lines:
the image display apparatus further comprises a scanning section that scans the plurality of scanning lines to display the images in the display area;
the scanning section performs a scan driving operation within a time equivalent to one frame period of input image signals, the scan driving operation including:
a first operation of scanning a scanning line group corresponding to part or entirety of the display area; and
a second operation of scanning a scanning line group corresponding to a high rate area which is the specific divisional area for displaying the images at the higher rate than in the further divisional area;
the part of the display area comprises the high rate area and a divisional area other than the high rate area; and
the scanning section sets a scanning line to be scanned first in the first operation, according to the scanning line group corresponding to the high rate area.

9. The image display apparatus according to claim 1, wherein:
the display section comprises a plurality of scanning lines:
the image display apparatus further comprises a scanning section that scans the plurality of scanning lines to display the images in the display area;
the scanning section performs a scan driving operation within a time equivalent to one frame period of input image signals, the scan driving operation including:
a first operation for displaying the source image based on the input image signal, in entirety of the display area; and
a second operation for displaying the interpolating image based on the interpolated image signal, in a high rate area which is a divisional area for displaying the images at the higher rate than in the further divisional area;
the scanning section scans a scanning line group corresponding to the entirety of the display area in the first operation, and scans a scanning line group corresponding to the high rate area in the second operation.

10. The image display apparatus according to claim 9, wherein:
the first operation comprises scanning the scanning line group corresponding to the entirety of the display area once; and
the second operation comprises scanning the scanning line group corresponding to the high rate area once or more.

11. The image display apparatus according to claim 9, wherein the high rate area comprises:
a first high rate area for displaying the images at a relatively high rate; and
a second high rate area for displaying the images at a relatively low rate.

12. The image display apparatus according to claim 1, wherein:
the display section comprises a plurality of scanning lines:
the image display apparatus further comprises a scanning section that scans the plurality of scanning lines to display the images in the display area;
the scanning section performs a scan driving operation within a time equivalent to one frame period of input image signals, the scan driving operation including:
a first operation for displaying the source image based on the input image signal, in entirety of the display area;
a second operation for displaying the interpolating image based on the interpolated image signal, in the entirety of the display area; and
a third operation for displaying the interpolating image based on the interpolated image signal, in a high rate area which is a divisional area for displaying the images at the higher rate than in the further divisional area; and
the scanning section scans a scanning line group corresponding to the entirety of the display area in the first operation, scans a scanning line group corresponding to the entirety of the display area in the second operation and scans a scanning line group corresponding to the high rate area in the third operation.

13. The image display apparatus according to claim 1, wherein:
the display section comprises a plurality of scanning lines:
the image display apparatus further comprises a scanning section that scans the plurality of scanning lines to display the images in the display area;
the scanning section performs a scan driving operation within a time equivalent to one frame period of input image signals, the scan driving operation including:
a first operation for displaying the source image based on the input image signal, in part of the display area; and
a second operation for displaying the interpolating image based on the interpolated image signal, in a high rate area which is a divisional area for displaying the images at the higher rate than in the further divisional area;
the scanning section scans a scanning line group corresponding to the part of the display area N times, where N is an integer equal to or greater than one, in the first operation, and scans a scanning line group corresponding to the high rate area M times, where M is an integer greater than N, in the second operation; and
the part of the display area comprises a divisional area other than the high rate area.

14. The image display apparatus according to claim 1, wherein:
the display section comprises a plurality of scanning lines:
the image display apparatus further comprises a scanning section that scans the plurality of scanning lines to display the images in the display area;
the scanning section performs a scan driving operation within a time equivalent to one frame period of input image signals, the scan driving operation including:
a first operation for displaying the interpolating image based on the interpolated image signal, in part of the display area; and
a second operation for displaying the interpolating image based on the interpolated image signal, in a high rate area which is a divisional area for displaying the images at the higher rate than in the further divisional area;
the scanning section scans a scanning line group corresponding to the part of the display area N times, where N is an integer equal to or greater than one, in the first operation, and scans a scanning line group corresponding to the high rate area M times, where M is an integer greater than N, in the second operation; and
the part of the display area comprises a divisional area other than the high rate area.

15. An image display method of, in an image display apparatus that comprises a display area, sequentially displaying, in the display area, images including at least one of a source image based on an input image signal and an interpolating image based on an interpolated image signal, the image display method comprising: displaying the images at a higher rate in a specific divisional area in the display area than in a further divisional area in the display area.

## Amended claims

### Amended claims under Art. 19.1 PCT

**1.** An image display apparatus comprising:
a signal processing section that generates an interpolated image signal from an input image signal; and
a display section that comprises a display area, and that sequentially displays, in the display area, images including at least one of a source image based on the input image signal and an interpolating image based on the interpolated image signal,
wherein the display section displays the images at a higher rate in a specific divisional area in the display area than in a further divisional area in the display area for displaying the images at a rate higher than an input frame rate of input image signals.

**2.** The image display apparatus according to claim 1, wherein the specific divisional area is determined in advance or is selected motion-adaptively.

**3.** The image display apparatus according to claim 1, wherein the specific divisional area comprises a lower part in the display area.

**4.** The image display apparatus according to claim 1, wherein:
the display section comprises a plurality of scanning lines:
the image display apparatus further comprises a scanning section that scans the plurality of scanning lines to display the images in the display area; and
the scanning section scans a same scanning line at equal time intervals in a high rate area which is the specific divisional area for displaying the images at the higher rate than in the further divisional area.

**5.** The image display apparatus according to claim 1, wherein:
the display section comprises a plurality of scanning lines:
the image display apparatus further comprises a scanning section that scans the plurality of scanning lines to display the images in the display area;
the scanning section performs a scan driving operation within a time equivalent to one frame period of the input image signals, the scan driving operation including:
a first operation of scanning a scanning line group corresponding to part or entirety of the display area; and
a second operation of scanning a scanning line group corresponding to a high rate area which is the specific divisional area for displaying the images at the higher rate than in the further divisional area;
the part of the display area comprises the high rate area and a divisional area other than the high rate area; and
in the first operation, the scanning section inserts a scan of a scanning line group corresponding to the high rate area, into a scan of a scanning line group corresponding to the divisional area other than the high rate area.

**6.** The image display apparatus according to claim 1, wherein:
the display section comprises a plurality of scanning lines:
the image display apparatus further comprises a scanning section that scans the plurality of scanning lines to display the images in the display area;
the scanning section performs a scan driving operation within a time equivalent to one frame period of the input image signals, the scan driving operation including:
a first operation of scanning a scanning line group corresponding to part or entirety of the display area; and
a second operation of scanning a scanning line group corresponding to a high rate area which is the specific divisional area for displaying the images at the higher rate than in the further divisional area;
the part of the display area comprises the high rate area and a divisional area other than the high rate area; and
the scanning section inserts the second operation into the first operation.

**7.** The image display apparatus according to claim 6, wherein the signal processing section generates the interpolated image signal from an input image signal received as input earlier and an input image signal received as input later, and interpolates the interpolated image signal generated from the input image signal received as input earlier and the input image signal received as input later, in the input image signal received as input later.

**8.** The image display apparatus according to claim 1, wherein:
the display section comprises a plurality of scanning lines:
the image display apparatus further comprises a scanning section that scans the plurality of scanning lines to display the images in the display area;
the scanning section performs a scan driving operation within a time equivalent to one frame period of the input image signals, the scan driving operation including:
a first operation of scanning a scanning line group corresponding to part or entirety of the display area; and
a second operation of scanning a scanning line group corresponding to a high rate area which is the specific divisional area for displaying the images at the higher rate than in the further divisional area;
the part of the display area comprises the high rate area and a divisional area other than the high rate area; and
the scanning section sets a scanning line to be scanned first in the first operation, according to the scanning line group corresponding to the high rate area.

**9.** The image display apparatus according to claim 1, wherein:
the display section comprises a plurality of scanning lines:
the image display apparatus further comprises a scanning section that scans the plurality of scanning lines to display the images in the display area;
the scanning section performs a scan driving operation within a time equivalent to one frame period of the input image signals, the scan driving operation including:
a first operation for displaying the source image based on the input image signal, in entirety of the display area; and
a second operation for displaying the interpolating image based on the interpolated image signal, in a high rate area which is a divisional area for displaying the images at the higher rate than in the further divisional area;
the scanning section scans a scanning line group corresponding to the entirety of the display area in the first operation, and scans a scanning line group corresponding to the high rate area in the second operation.

**10.** The image display apparatus according to claim 9, wherein:
the first operation comprises scanning the scanning line group corresponding to the entirety of the display area once; and
the second operation comprises scanning the scanning line group corresponding to the high rate area once or more.

**11.** The image display apparatus according to claim 9, wherein the high rate area comprises:
a first high rate area for displaying the images at a relatively high rate; and
a second high rate area for displaying the images at a relatively low rate.

**12.** The image display apparatus according to claim 1, wherein:
the display section comprises a plurality of scanning lines:
the image display apparatus further comprises a scanning section that scans the plurality of scanning lines to display the images in the display area;
the scanning section performs a scan driving operation within a time equivalent to one frame period of the input image signals, the scan driving operation including:
a first operation for displaying the source image based on the input image signal, in entirety of the display area;
a second operation for displaying the interpolating image based on the interpolated image signal, in the entirety of the display area; and
a third operation for displaying the interpolating image based on the interpolated image signal, in a high rate area which is a divisional area for displaying the images at the higher rate than in the further divisional area; and
the scanning section scans a scanning line group corresponding to the entirety of the display area in the first operation, scans a scanning line group corresponding to the entirety of the display area in the second operation and scans a scanning line group corresponding to the high rate area in the third operation.

**13.** The image display apparatus according to claim 1, wherein:
the display section comprises a plurality of scanning lines:
the image display apparatus further comprises a scanning section that scans the plurality of scanning lines to display the images in the display area;
the scanning section performs a scan driving operation within a time equivalent to one frame period of the input image signals, the scan driving operation including:
a first operation for displaying the source image based on the input image signal, in part of the display area; and
a second operation for displaying the interpolating image based on the interpolated image signal, in a high rate area which is a divisional area for displaying the images at the higher rate than in the further divisional area;
the scanning section scans a scanning line group corresponding to the part of the display area N times, where N is an integer equal to or greater than one, in the first operation, and scans a scanning line group corresponding to the high rate area M times, where M is an integer greater than N, in the second operation; and
the part of the display area comprises a divisional area other than the high rate area.

**14.** The image display apparatus according to claim 1, wherein:
the display section comprises a plurality of scanning lines:
the image display apparatus further comprises a scanning section that scans the plurality of scanning lines to display the images in the display area;
the scanning section performs a scan driving operation within a time equivalent to one frame period of the input image signals, the scan driving operation including:
a first operation for displaying the interpolating image based on the interpolated image signal, in part of the display area; and
a second operation for displaying the interpolating image based on the interpolated image signal, in a high rate area which is a divisional area for displaying the images at the higher rate than in the further divisional area;
the scanning section scans a scanning line group corresponding to the part of the display area N times, where N is an integer equal to or greater than one, in the first operation, and scans a scanning line group corresponding to the high rate area M times, where M is an integer greater than N, in the second operation; and
the part of the display area comprises a divisional area other than the high rate area.

**15.** An image display method of, in an image display apparatus that comprises a display area, sequentially displaying, in the display area, images including at least one of a source image based on an input image signal and an interpolating image based on an interpolated image signal, the image display method comprising: displaying the images at a higher rate in a specific divisional area in the display area than in a further divisional area in the display area for displaying the images at a rate higher than an input frame rate of input image signals.
